# EUROPEAN PATENT APPLICATION

(11) **EP 4 831 211 A1**
(43) Date of publication of application: **28.10.2026**
(21) Application number: 24907436.0
(22) Date of filing: 18.12.2024
(51) Int. Cl.: C08F 210/06, B32B 27/32, C08J 5/18, C08L 23/04, C08L 23/10, C08L 23/14, C08L 23/26, C09D 123/14, C09D 123/18

(54) **PROPYLENE a-OLEFIN COPOLYMER, RESIN COMPOSITION, MOLDED BODY, AND POWER STORAGE DEVICE**

(30) Priority: 18.12.2023 JP 2023213227; 16.02.2024 JP 2024021910
(71) Applicant: Mitsui Chemicals, Inc., Tokyo 104-0028 (JP)
(72) Inventor: SAJI, Yoshitaka, Tokyo 104-0028 (JP); KAMIYA, Nozomi, Tokyo 104-0028 (JP); TANAKA, Shinya, Tokyo 104-0028 (JP); MIZUMA, Takahiro, Tokyo 104-0028 (JP); SHIOZAKI, Nao, Tokyo 104-0028 (JP); NODA, Kiminori, Tokyo 104-0028 (JP); TSUTSUMIDA, Yuho, Tokyo 104-0028 (JP)
(74) Representative: Hoffmann Eitle
(86) International application number: PCT/JP2024/044700
(87) International publication number: WO 2025/135051

(57) **Abstract**

One embodiment of a propylene/α-olefin copolymer includes a constituent unit (i) derived from propylene and a constituent unit (ii) derived from an α-olefin having 5 to 20 carbon atoms, and satisfies the following requirements (A1) and (A2):
(A1) when the total content of the constituent unit (i) and the constituent unit (ii) is taken as 100 mol%, the content of the constituent unit (i) is 70 to 99 mol% and the content of the constituent unit (ii) is 1 to 30 mol%; and
(A2) the melting point (Tm) measured by a differential scanning calorimeter (DSC) is lower than 130°C or is not observed.

## Description

### Cross-Reference to Related Applications

The present application claims priority based on Japanese Patent Application No. 2023-213227 filed on December 18, 2023 and Japanese Patent Application No. 2024-021910 filed on February 16, 2024, and the entire disclosures thereof are incorporated herein by reference and form part of the disclosure of the present specification.

### Technical Field

The present disclosure relates to a propylene/α-olefin copolymer, a resin composition, a shaped article, and an electrical storage device.

### Background Art

In recent years, as a soft material composed of a polyolefin having excellent flexibility, heat resistance, and transparency, and having environmental suitability and hygienic properties, there have been known a propylene/α-olefin copolymer including, as a main component, a constituent unit derived from propylene, and a resin composition containing the propylene/α-olefin copolymer (see, for example, Patent Literature 1, 2, and 3).

### Citation List

### Patent Literature

Patent Literature 1: JP2013-049863A
Patent Literature 2: JPH11-193309A
Patent Literature 3: JP2000-7731A

### Summary of Invention

### Technical Problem

As applications of propylene-based copolymers have expanded, the performance of currently used propylene/α-olefin copolymers or resin compositions containing propylene/α-olefin copolymers has been insufficient in some cases, for example, from the viewpoint of the balance between flexibility and tensile strength.

An object of the present disclosure is to provide a propylene/α-olefin copolymer having an excellent balance between flexibility and tensile strength, and a resin composition containing the copolymer. Another object of the present disclosure is to provide a shaped article having an excellent balance between flexibility and tensile strength, and an electrical storage device including the shaped article.

### Solution to Problem

The present disclosure relates to, for example, the following [1] to [21].
[1] A propylene/α-olefin copolymer (A) comprising: a constituent unit (i) derived from propylene and a constituent unit (ii) derived from an α-olefin having 5 to 20 carbon atoms, and satisfying the following requirements (A1) and (A2):
   (A1) when the total content of the constituent unit (i) and the constituent unit (ii) is taken as 100 mol%,
      the content of the constituent unit (i) is 70 to 99 mol%, and
      the content of the constituent unit (ii) is 1 to 30 mol%; and
   (A2) the melting point (Tm) measured by a differential scanning calorimeter (DSC) is lower than 130°C or is not observed.
[2] The propylene/α-olefin copolymer (A) according to [1], wherein the α-olefin having 5 to 20 carbon atoms is 4-methyl-1-pentene.
[3] The propylene/α-olefin copolymer (A) according to [1] or [2], wherein the density measured at 25°C in accordance with ASTM D1505 is 855 to 875 kg/m³.
[4] The propylene/α-olefin copolymer (A) according to any one of [1] to [3], wherein the glass transition temperature (Tg) is -12 to -3°C.
[5] The propylene/α-olefin copolymer (A) according to any one of [1] to [4], wherein the melting point (Tm) is lower than 110°C or is not observed.
[6] The propylene/α-olefin copolymer (A) according to any one of [1] to [5], wherein the intrinsic viscosity [η] in decalin solvent at 135°C is 1.8 to 2.5 dl/g.
[7] The propylene/α-olefin copolymer (A) according to any one of [1] to [6], wherein the ratio (Mw/Mn) of a weight average molecular weight (Mw) to a number average molecular weight (Mn), measured by gel permeation chromatography (GPC) and obtained in terms of polystyrene, is 1.7 to 2.5.
[8] A resin composition comprising: the propylene/α-olefin copolymer (A) according to any one of [1] to [7]; and a propylene-based polymer (B) satisfying the following requirements (B1) and (B2):
   (B1) the melt flow rate (MFR) measured in accordance with ASTM D1238E at 230°C under a load of 2.16 kg is 0.1 to 500 g/10 min; and
   (B2) the melting point (Tm) measured by a differential scanning calorimeter (DSC) is 110°C to 170°C.
[9] The resin composition according to [8], wherein the α-olefin having 5 to 20 carbon atoms in the propylene/α-olefin copolymer (A) is 4-methyl-1-pentene.
[10] The resin composition according to [8] or [9], wherein, when the total content of the copolymer (A) and the polymer (B) is taken as 100 mass%, the content of the copolymer (A) is 8 to 90 mass%, and the content of the polymer (B) is 10 to 92 mass%.
[11] The resin composition according to any one of [8] to [10], wherein the propylene-based polymer (B) comprises a random polypropylene or a block polypropylene.
[12] The resin composition according to any one of [8] to [11], further comprising an ethylene-based polymer (C).
[13] The resin composition according to any one of [10] to [12], wherein the α-olefin having 5 to 20 carbon atoms in the propylene/α-olefin copolymer (A) is 4-methyl-1-pentene.
[14] The resin composition according to [12] or [13], wherein the propylene-based polymer (B) comprises a random polypropylene or a block polypropylene.
[15] The resin composition according to any one of [12] to [14], wherein the ethylene-based polymer (C) comprises a high-pressure low-density polyethylene (c1) or an ethylene/α-olefin copolymer (c2).
[16] The resin composition according to [15], wherein the density of the high-pressure low-density polyethylene (c1) is 900 to 925 kg/m³, the ethylene/α-olefin copolymer (c2) includes at least a constituent unit derived from ethylene and a constituent unit derived from an α-olefin having 3 to 20 carbon atoms, and the content of the constituent unit derived from ethylene is 80 to 99 mol%, and the content of the constituent unit derived from an α-olefin having 3 to 20 carbon atoms is 1 to 20 mol%.
[17] The resin composition according to any one of [12] to [16], wherein, when the total content of the copolymer (A), the polymer (B), and the polymer (C) is taken as 100 mass%, the content of the copolymer (A) is 15 to 45 mass%, the content of the polymer (B) is 50 to 80 mass%, and the content of the polymer (C) is 5 to 15 mass%.
[18] A shaped article comprising the propylene/α-olefin copolymer (A) according to any one of [1] to [7], or the resin composition according to any one of [8] to [17].
[19] The shaped article according to [18], which is a film.
[20] The shaped article according to [18] or [19], which is a package for batteries.
[21] An electrical storage device comprising the shaped article according to any one of [18] to [20].

### Advantageous Effects of Invention

The propylene/α-olefin copolymer of the present disclosure and the resin composition containing the copolymer have an excellent balance between flexibility and tensile strength. The shaped article of the present disclosure has an excellent balance between flexibility and tensile strength. The electrical storage device of the present disclosure includes the shaped article.

### Description of Embodiments

In the present specification, a numerical range expressed using "to" means a range including the numerical values described before and after "to" as a lower limit value and an upper limit value, respectively. "A to B" indicating a numerical range means A or more and B or less.

In the present specification, when the unit of the numerical values described before and after "to" indicating a numerical range is the same, the unit of the numerical value described before "to" may be omitted. For example, "851 kg/m³ to 900 kg/m³" may be described as "851 to 900 kg/m³".

In the present specification, when referring to the amount of each component in a composition, in the case where a plurality of substances corresponding to each component are present in the composition, unless otherwise stated, the total amount of the plurality of substances present in the composition is meant.

In the present specification, a combination of two or more preferred aspects is a more preferred aspect.

In the present specification, unless otherwise specified, each component in a composition, or each constituent unit in a polymer (resin), may be contained as one type or may be contained as two or more types.

In the present specification, room temperature means 23°C.

### [Propylene/α-olefin copolymer (A)]

The propylene/α-olefin copolymer (A) of the present disclosure (hereinafter also referred to as "copolymer (A)") includes a constituent unit (i) derived from propylene and a constituent unit (ii) derived from an α-olefin having 5 to 20 carbon atoms.

The copolymer (A) satisfies the following requirements (A1) and (A2).
(A1) When the total content of the constituent unit (i) and the constituent unit (ii) is taken as 100 mol%, the content of the constituent unit (i) is 70 to 99 mol% and the content of the constituent unit (ii) is 1 to 30 mol%.
(A2) The melting point (Tm) measured by a differential scanning calorimeter (DSC) is lower than 130°C or is not observed.

The copolymer (A) is, for example, a copolymer obtained by using at least propylene and one type or two or more types of α-olefins having 5 to 20 carbon atoms. The copolymer (A) is preferably a random copolymer.

The content of the constituent unit (i) is 70 to 99 mol%, preferably 75 to 93 mol%, more preferably 80 to 93 mol%, still more preferably 83 to 93 mol%, and particularly preferably 89 to 93 mol%.

The content of the constituent unit (ii) is 1 to 30 mol%, preferably 7 to 25 mol%, more preferably 7 to 20 mol%, still more preferably 7 to 17 mol%, and particularly preferably 7 to 11 mol%.

The respective contents of the constituent unit (i) and the constituent unit (ii) are contents when the total content of the constituent unit (i) and the constituent unit (ii) is taken as 100 mol%. The contents of the constituent unit (i) and the constituent unit (ii) can be measured by ¹³C-NMR, specifically by the method described in the Examples section.

A copolymer (A) in which the contents of the constituent unit (i) and the constituent unit (ii) are within the above ranges tends to have an excellent balance between flexibility and mechanical strength, and particularly tends to have an excellent balance between flexibility and tensile strength.

By using the copolymer (A) in which the contents of the constituent unit (i) and the constituent unit (ii) are within the above ranges, a resin composition having an excellent balance among heat resistance, tensile strength, and resistance to whitening can be obtained.

Examples of the α-olefin having 5 to 20 carbon atoms include 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosene. Among these, 1-hexene, 4-methyl-1-pentene, 1-octene, 1-decene, and 1-dodecene are preferable in that a crystalline structure having many tie molecules can be produced and a copolymer having a more excellent balance between flexibility and tensile strength can be obtained, and 4-methyl-1-pentene is more preferable in that a copolymer having more excellent tensile strength can be obtained.

In the production of the copolymer (A), at least one type of α-olefin having 5 to 20 carbon atoms is used, and two or more types thereof may be used, but one type of α-olefin is preferably used. The copolymer (A) includes at least one type of constituent unit (ii) derived from an α-olefin having 5 to 20 carbon atoms, and may include two or more types thereof, but preferably includes one type of constituent unit (ii).

The copolymer (A) may further include an additional constituent unit other than the constituent unit (i) and the constituent unit (ii). Examples of polymerizable monomers that form the additional constituent units include ethylene, 1-butene, vinyl compounds, vinyl esters, conjugated dienes, and non-conjugated polyenes.

The total content of the constituent unit (i) and the constituent unit (ii) in the copolymer (A) is preferably 80 mass% or more, more preferably 85 mass% or more, still more preferably 90 mass% or more, even more preferably 95 mass% or more, and particularly preferably 98 mass% or more, based on the mass of the copolymer (A).

The copolymer (A) may include at least one type of constituent unit derived from a biomass-derived monomer. Examples of the biomass-derived monomer include biomass-derived propylene and biomass-derived α-olefins having 5 to 20 carbon atoms. The same type of monomer constituting the copolymer may be only a biomass-derived monomer, may be only a fossil fuel-derived monomer, or may include both a biomass-derived monomer and a fossil fuel-derived monomer.

In one embodiment, the density of the copolymer (A) is preferably 851 to 900 kg/m³, more preferably 851 to 890 kg/m³, still more preferably 851 to 880 kg/m³, even more preferably 855 to 875 kg/m³, and particularly preferably 860 to 875 kg/m³. A copolymer (A) having a density within the above range is excellent in flexibility.

In one embodiment, the density of the copolymer (A) is preferably 830 to 900 kg/m³, more preferably 840 to 890 kg/m³, still more preferably 850 to 880 kg/m³, even more preferably 855 to 875 kg/m³, and particularly preferably 860 to 875 kg/m³. By using a copolymer (A) having a density within the above range, a resin composition having excellent flexibility and excellent resistance to whitening can be obtained.

The density is measured at 25°C in accordance with ASTM D1505. The density of the copolymer (A) can be adjusted by the contents of the constituent units (i) and (ii), for example.

In one embodiment, the intrinsic viscosity [η] of the copolymer (A) is preferably 1.6 to 5.0 dl/g, more preferably 1.6 to 4.0 dl/g, and still more preferably 1.8 to 2.5 dl/g.

In one embodiment, the intrinsic viscosity [η] of the copolymer (A) is preferably 0.5 to 5.0 dl/g, more preferably 1.0 to 4.0 dl/g, and still more preferably 1.5 to 2.5 dl/g.

A copolymer (A) having an intrinsic viscosity [η] within the above range is excellent in moldability, mechanical strength, and low-stickiness. The intrinsic viscosity [η] is measured in decalin solvent at 135°C.

The melting point (Tm) of the copolymer (A) is lower than 130°C or is not observed. Preferably, the melting point is observed. When the melting point is observed, the melting point is preferably 110°C or lower, more preferably 90°C or lower, and still more preferably 85°C or lower. The lower limit value is not particularly limited, but may be 50°C or higher or may be 55°C or higher. When the melting point is observed, the melting point is preferably 50°C or higher and lower than 130°C, more preferably 50 to 110°C, still more preferably 50 to 90°C, and particularly preferably 55 to 85°C.

A copolymer (A) having a melting point within the above range or having no observed melting point is excellent in flexibility. By using a copolymer (A) having a melting point within the above range or having no observed melting point, a resin composition excellent in flexibility and resistance to whitening can be obtained. The melting point (Tm) of the copolymer (A) can be adjusted by the contents of the constituent units (i) and (ii), for example.

The melting point is measured by DSC, specifically by the method described in the Examples section. The melting point refers to the temperature at the peak top of a melting peak. The phrase "the melting point is not observed" in DSC measurement means that no melting peak is observed in the DSC measurement. The phrase "no melting peak is observed" means that no crystal melting peak having a heat of fusion (ΔH) of 1 J/g or more is observed in the range of -70 to 200°C. In the case where two or more melting peaks are observed, the melting point is the highest temperature among the peak top temperatures of these peaks.

When a melting peak is observed, the heat of fusion (ΔH), which is the integrated value of the melting peak, is preferably 1 to 50 J/g, more preferably 5 to 45 J/g, still more preferably 5 to 40 J/g, even more preferably 10 to 40 J/g, and particularly preferably 10 to 30 J/g. A copolymer (A) having a ΔH within the above range has an excellent balance between flexibility and low-stickiness.

The weight average molecular weight (Mw) of the copolymer (A) is preferably 100,000 to 550,000, more preferably 200,000 to 525,000, and still more preferably 300,000 to 500,000. A copolymer (A) having a Mw within the above range is excellent in moldability, mechanical strength, and low-stickiness. The Mw is a value measured by gel permeation chromatography (GPC) and obtained in terms of polystyrene. The details of the measurement conditions are described in the Examples section.

The ratio of the weight average molecular weight (Mw) to the number average molecular weight (Mn) of the copolymer (A) (Mw/Mn) is preferably 1.0 to 3.5, more preferably 1.4 to 3.0, and still more preferably 1.7 to 2.5. A copolymer (A) having a Mw/Mn within the above range has an excellent balance among mechanical strength, impact resistance, and low-stickiness. The Mw/Mn is one of the indicators representing the molecular weight distribution. The Mw and the Mn are each a value measured by gel permeation chromatography (GPC) and obtained in terms of polystyrene. The details of the measurement conditions are described in the Examples section.

The MFR of the copolymer (A) is preferably 0.1 to 30 g/10 min, more preferably 0.2 to 15 g/10 min, and still more preferably 1 to 10 g/10 min. A copolymer (A) having an MFR within the above range has an excellent balance among moldability, mechanical strength, and low-stickiness. The MFR of the copolymer (A) is measured under conditions of 230°C and a load of 2.16 kg in accordance with ASTM D1238E.

The glass transition temperature (Tg) of the copolymer (A) is preferably -20 to 5°C, more preferably -15 to 0°C, still more preferably -12 to -3°C, and particularly preferably -12 to -7°C. A copolymer (A) having a Tg within the above range is excellent in shape followability. The Tg is measured by DSC, specifically by the method described in the Examples section.

In one embodiment of the copolymer (A), when the total content of the constituent unit (i) and the constituent unit (ii) is taken as 100 mol%, the content of the constituent unit (i) is 75 to 93 mol% and the content of the constituent unit (ii) is 7 to 25 mol%, the density is 851 to 900 kg/m³, the intrinsic viscosity [η] is 1.6 to 5.0 dl/g, and the melting point (Tm) is lower than 110°C or is not observed.

In one embodiment of the copolymer (A), when the total content of the constituent unit (i) and the constituent unit (ii) is taken as 100 mol%, the content of the constituent unit (i) is 75 to 93 mol% and the content of the constituent unit (ii) is 7 to 25 mol%, the density is 855 to 875 kg/m³, the intrinsic viscosity [η] is 1.8 to 2.5 dl/g, the melting point (Tm) is lower than 110°C or is not observed, and the glass transition temperature (Tg) is -12 to -3°C.

The breaking stress of the copolymer (A) is preferably 10 to 40 MPa, more preferably 13 to 37 MPa, and still more preferably 15 to 35 MPa.

The tensile modulus of the copolymer (A) is preferably 1 to 250 MPa, more preferably 3 to 230 MPa, and still more preferably 5 to 200 MPa.

The breaking stress and tensile modulus of the copolymer (A) are values measured for a dumbbell specimen prepared as follows. Using a hydraulic heat press molding machine set at 190°C, the copolymer (A) is heated for 5 minutes, molded under pressurization at 7.5 MPa for 2 minutes, and then cooled under pressurization at 20°C and 7.5 MPa for 5 minutes to give a 2 mm-thick sheet. After 7 days or more have elapsed at room temperature from the molding, a dumbbell ASTM No. 4 is prepared from the sheet in accordance with ASTM D638, and the tensile modulus and breaking stress are measured for the dumbbell under conditions of 23°C and a tensile speed of 50 mm/min.

The Shore A hardness (instantaneous value) of the copolymer (A) is preferably 20 to 99, more preferably 25 to 99, still more preferably 28 to 98, even more preferably 30 to 98, especially preferably 40 to 98, particularly preferably 50 to 98, and particularly more preferably 60 to 97. When measurement of the Shore A hardness is difficult, a similar evaluation can be carried out using Shore D hardness instead, and the Shore D hardness (instantaneous value) of the copolymer (A) is preferably 12 to 62 and more preferably 16 to 60.

The Shore A hardness and Shore D hardness of the copolymer (A) are values measured for a specimen prepared as follows. Using a hydraulic heat press molding machine set at 190°C, the copolymer (A) is heated for 5 minutes, molded under pressurization at 7.5 MPa for 2 minutes, and then cooled under pressurization at 20°C and 7.5 MPa for 5 minutes to give a 2 mm-thick sheet. Three sheets are stacked to give a specimen. After 7 days or more have elapsed at room temperature from the molding, in accordance with ASTM D2240, a durometer hardness tester (type A or type D) is used, and the scale is read immediately after bringing the indenter into contact with the specimen. In this manner, the Shore A hardness and the Shore D hardness are obtained.

### <Method for producing copolymer (A)>

The copolymer (A) can be suitably produced by a method including a step of polymerizing propylene and at least one type of olefin selected from α-olefins having 5 to 20 carbon atoms in the presence of a catalyst for olefin polymerization described below. By using such a catalyst for olefin polymerization and setting the polymerization conditions within the ranges described later as appropriate, the copolymer (A) satisfying the requirements described above can be easily produced.

As the catalyst for olefin polymerization, a catalyst containing a bridged metallocene compound (a) and at least one type of compound (b) selected from the following (b-1) to (b-3) is preferable:
(b-1) an organoaluminum oxy compound;
(b-2) an ionic compound that reacts with the bridged metallocene compound (a) to form an ion pair; and
(b-3) an organoaluminum compound.

### <<Bridged metallocene compound (a)>>

As the bridged metallocene compound (a), a bridged metallocene compound represented by the following formula [a1] is preferable, and a bridged metallocene compound represented by the following formula [a2] is more preferable.

The bridged metallocene compound (a) may be used singly or may be used in combination of two or more types thereof.

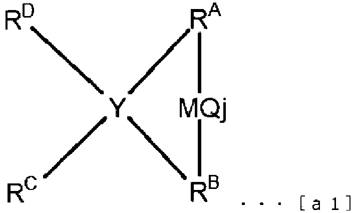

The meaning of each symbol in the formula [a1] is as follows. M is a Group 4 transition metal, such as a titanium atom, a zirconium atom, or a hafnium atom. j is an integer of 1 to 4. Q is selected from halogen atoms, hydrocarbon groups, neutral conjugated or non-conjugated dienes having 10 or less carbon atoms, anionic ligands, and neutral ligands capable of coordinating with a lone electron pair. When j is an integer of 2 to 4, a plurality of Q may be the same or different. RA and R^{B} may be the same as or different from each other, and are a mononuclear or polynuclear hydrocarbon residue capable of forming a sandwich structure together with M. Y is a carbon atom or a silicon atom. RC and R^{D} may be the same as or different from each other, and are selected from a hydrogen atom, hydrocarbon groups, silicon-containing groups, halogen atoms, and halogen-containing hydrocarbon groups, and may be bonded to each other to form a ring.

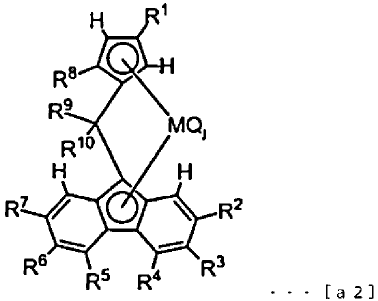

The meaning of each symbol in the formula [a2] is as follows. R¹ is a hydrocarbon group, a silicon-containing group, or a halogen-containing hydrocarbon group. R² to R¹⁰ are selected from a hydrogen atom, hydrocarbon groups, silicon-containing groups, halogen atoms, and halogen-containing hydrocarbon groups, and may be the same as or different from each other, and the respective substituents may be bonded to each other to form a ring. M is a Group 4 transition metal. j is an integer of 1 to 4. Q is selected from halogen atoms, hydrocarbon groups, neutral conjugated or non-conjugated dienes having 10 or less carbon atoms, anionic ligands and neutral ligands capable of coordinating with a lone electron pair. In the case where j is an integer of 2 to 4, a plurality of Q may be the same or different.

Among the bridged metallocene compounds represented by the formula [a2], a bridged metallocene compound represented by the following formula [a3] is particularly preferable from the viewpoints of polymerization characteristics, availability, and ease of obtaining a propylene/α-olefin copolymer satisfying the above-described requirements, for example.

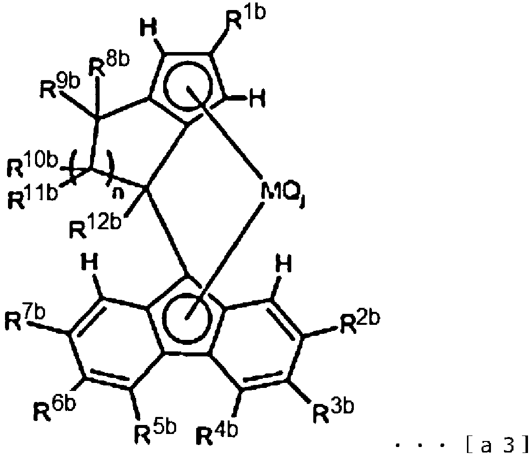

The meaning of each symbol in the formula [a3] is as follows. R^{1b} is a hydrocarbon group, a silicon-containing group, or a halogen-containing hydrocarbon group. R^{2b} to R^{12b} are selected from a hydrogen atom, hydrocarbon groups, silicon-containing groups, halogen atoms, and halogen-containing hydrocarbon groups, and may be the same as or different from each other, and the respective substituents may be bonded to each other to form a ring. M is a Group 4 transition metal. n is an integer of 1 to 3. j is an integer of 1 to 4. Q is selected from halogen atoms, hydrocarbon groups, neutral conjugated or non-conjugated dienes having 10 or less carbon atoms, anionic ligands, and neutral ligands capable of coordinating with a lone electron pair. In the case where j is an integer of 2 to 4, a plurality of Q may be the same or different.

Examples of the hydrocarbon groups in R¹ to R¹⁰ and R^{1b} to R^{12b} include linear hydrocarbon groups, branched hydrocarbon groups, cyclic saturated hydrocarbon groups, cyclic unsaturated hydrocarbon groups, and groups obtained by replacing one or two or more hydrogen atoms possessed by saturated hydrocarbon groups with cyclic unsaturated hydrocarbon groups. The number of carbon atoms in the hydrocarbon groups is preferably 1 to 20, more preferably 1 to 15, and still more preferably 1 to 10.

Examples of the linear hydrocarbon groups include linear alkyl groups such as a methyl group, an ethyl group, a n-propyl group, a n-butyl group, a n-pentyl group, a n-hexyl group, a n-heptyl group, a n-octyl group, a n-nonyl group, and a n-decanyl group; and linear alkenyl groups such as an allyl group.

Examples of the branched hydrocarbon groups include branched alkyl groups such as an isopropyl group, a tert-butyl group, a tert-amyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, and a 1-methyl-1-isopropyl-2-methylpropyl group.

Examples of the cyclic saturated hydrocarbon groups include cycloalkyl groups such as a cyclopentyl group, a cyclohexyl group, a cycloheptyl group, a cyclooctyl group, and a methylcyclohexyl group; and polycyclic groups such as a norbornyl group, an adamantyl group, and a methyladamantyl group.

Examples of the cyclic unsaturated hydrocarbon groups include aryl groups such as a phenyl group, a tolyl group, a naphthyl group, a biphenyl group, a phenanthryl group, and an anthracenyl group; cycloalkenyl groups such as a cyclohexenyl group; and polycyclic unsaturated alicyclic groups such as a 5-bicyclo[2.2.1]hept-2-enyl group.

Examples of the groups obtained by replacing one or two or more hydrogen atoms possessed by saturated hydrocarbon groups with cyclic unsaturated hydrocarbon groups include groups obtained by replacing one or two or more hydrogen atoms possessed by alkyl groups with aryl groups, such as a benzyl group, a cumyl group, a 1,1-diphenylethyl group, and a triphenylmethyl group.

Examples of the silicon-containing groups in R¹ to R¹⁰ and R^{1b} to R^{12b} include groups represented by the formula -SiR₃ (wherein a plurality of R are each independently an alkyl group having 1 to 15 carbon atoms or a phenyl group), such as a trimethylsilyl group, a triethylsilyl group, a dimethylphenylsilyl group, a diphenylmethylsilyl group, and a triphenylsilyl group.

Examples of the halogen-containing hydrocarbon groups in R¹ to R¹⁰ and R^{1b} to R^{12b} include groups obtained by replacing one or two or more hydrogen atoms possessed by the above-described hydrocarbon groups with halogen atoms, such as a trifluoromethyl group.

Examples of the halogen atoms in R² to R¹⁰ and R^{2b} to R^{12b} include a fluorine atom, a chlorine atom, a bromine atom, and an iodine atom.

Among the substituents of R² to R¹⁰ and R^{2b} to R^{12b}, two substituents (such as R² and R³, R³ and R⁴, R⁵ and R⁶, R⁶ and R⁷, R⁸ and R⁹, R⁹ and R¹⁰, R^{2b} and R^{3b}, R^{3b} and R^{4b}, R^{5b} and R^{6b}, R^{6b} and R^{7b}, R^{8b} and R^{9b}, R^{9b} and R^{10b}, R^{10b} and R^{11b}, and R^{11b} and R^{12b}) may be bonded to each other to form a ring, and such ring formation may occur at two or more positions in the molecule.

In the present specification, examples of the ring (spiro ring or additional ring) formed by two substituents bonded to each other include aliphatic rings and aromatic rings. Specific examples thereof include a cyclohexane ring, a benzene ring, a hydrogenated benzene ring, and a cyclopentene ring, with a cyclohexane ring, a benzene ring, and a hydrogenated benzene ring being preferable. Also, such a ring structure may further have a substituent such as an alkyl group on the ring.

R¹ and R^{1b} are preferably hydrocarbon groups from the viewpoint of stereoregularity, more preferably hydrocarbon groups having 1 to 20 carbon atoms, still more preferably not aryl groups, especially preferably linear hydrocarbon groups, branched hydrocarbon groups, or cyclic saturated hydrocarbon groups, and particularly preferably groups in which the carbon having a free valency (carbon bonded to the cyclopentadienyl ring) is a tertiary carbon.

Specific examples of R¹ and R^{1b} include a methyl group, an ethyl group, an isopropyl group, a tert-butyl group, a tert-pentyl group, a tert-amyl group, a 1-methylcyclohexyl group, and a 1-adamantyl group. R¹ and R^{1b} are more preferably substituents in which the carbon having a free valency is a tertiary carbon, such as a tert-butyl group, a tert-pentyl group, a 1-methylcyclohexyl group, and a 1-adamantyl group, and particularly preferably a tert-butyl group or a 1-adamantyl group.

In one embodiment, R⁸ is preferably a hydrocarbon group, more preferably a hydrocarbon group having 1 to 20 carbon atoms, and still more preferably an ethyl group. R⁸ may be bonded to R⁹ to form a ring.

In the formula [a2] and the formula [a3], the fluorene ring moiety is not particularly limited as long as it is a structure derived from a known fluorene or fluorene derivative. R⁴ and R⁵ are preferably hydrogen atoms from the viewpoints of stereoregularity and molecular weight. R^{4b} and R^{5b} are preferably hydrogen atoms from the viewpoints of stereoregularity and molecular weight.

R², R³, R⁶, and R⁷ are preferably hydrogen atoms or hydrocarbon groups, more preferably at least two of these are hydrocarbon groups, and still more preferably at least two of these are hydrocarbon groups having 1 to 20 carbon atoms. Alternatively, R² and R³ may be bonded to each other to form a ring, and R⁶ and R⁷ may be bonded to each other to form a ring.

R^{2b}, R^{3b}, R^{6b}, and R^{7b} are preferably hydrogen atoms or hydrocarbon groups, more preferably at least two of these are hydrocarbon groups, and still more preferably at least two of these are hydrocarbon groups having 1 to 20 carbon atoms. Alternatively, R^{2b} and R^{3b} may be bonded to each other to form a ring, and R^{6b} and R^{7b} may be bonded to each other to form a ring.

Examples of such substituted fluorenyl groups include a benzofluorenyl group, a dibenzofluorenyl group, an octahydrodibenzofluorenyl group, a 1,1,4,4,7,7,10,10-octamethyl-2,3,4,7,8,9,10,12-octahydro-1H-dibenzo[b,h]fluorenyl group, a 1,1,3,3,6,6,8,8-octamethyl-2,3,6,7,8,10-hexahydro-1H-dicyclopenta[b,h]fluorenyl group, and a 1',1',3',6',8',8'-hexamethyl-1'H,8'H-dicyclopenta[b,h]fluorenyl group, with a 1,1,4,4,7,7,10,10-octamethyl-2,3,4,7,8,9,10,12-octahydro-1H-dibenzo[b,h]fluorenyl group being particularly preferable.

In one embodiment, R⁹ and R¹⁰ are preferably hydrocarbon groups, and particularly preferably aryl groups. R⁹ may be bonded to R⁸ to form a ring, and in that case, R¹⁰ is preferably a hydrocarbon group, and particularly preferably an alkyl group.

R^{8b} is preferably a hydrogen atom or a hydrocarbon group, more preferably a hydrogen atom or a hydrocarbon group having 1 to 20 carbon atoms, and still more preferably a hydrogen atom or a methyl group.

R^{9b} is more preferably a hydrocarbon group, still more preferably an alkyl group having 1 or more carbon atoms such as a linear alkyl group or a branched alkyl group, a cycloalkyl group, or a cycloalkenyl group, and particularly preferably an alkyl group having 1 or more carbon atoms.

From the viewpoint of synthesis, R^{10b} and R^{11b} are also preferably hydrogen atoms. Alternatively, in the case of n = 1, R^{9b} and R^{10b} are more preferably bonded to each other to form a ring, and the ring is particularly preferably a 6-membered ring such as a cyclohexane ring. In this case, R^{11b} is preferably a hydrogen atom.

R^{12b} is preferably a hydrocarbon group, and particularly preferably an alkyl group.

M is a Group 4 transition metal, and for example, it is Ti, Zr, or Hf, preferably Zr or Hf, and particularly preferably Zr.

Q represents a halogen atom, a hydrocarbon group, a neutral conjugated or non-conjugated diene having 10 or less carbon atoms, an anionic ligand, or a neutral ligand capable of coordinating with a lone electron pair.

Examples of the halogen atom in Q include fluorine, chlorine, bromine, and iodine.

As the hydrocarbon group in Q, alkyl groups having 1 to 10 carbon atoms and cycloalkyl groups having 3 to 10 carbon atoms are preferable. Examples of the alkyl groups having 1 to 10 carbon atoms include a methyl group, an ethyl group, a n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1,1-dimethylbutyl group, a 1,1,3-trimethylbutyl group, and a neopentyl group. Examples of the cycloalkyl groups having 3 to 10 carbon atoms include a cyclohexylmethyl group, a cyclohexyl group, and a 1-methyl-1-cyclohexyl group. The number of carbon atoms in the hydrocarbon group is more preferably 5 or less.

Examples of the neutral conjugated or non-conjugated diene having 10 or less carbon atoms include, s-cis- or s-trans-η⁴-1,3-butadiene, s-cis- or s-trans-η⁴-1,4-diphenyl-1,3-butadiene, s-cis- or s-trans-η⁴-3-methyl-1,3-pentadiene, s-cis- or s-trans-η⁴-1,4-dibenzyl-1,3-butadiene, s-cis- or s-trans-η⁴-2,4-hexadiene, s-cis- or s-trans-η⁴-1,3-pentadiene, s-cis- or s-trans-η⁴-1,4-ditolyl-1,3-butadiene, and s-cis- or s-trans-η⁴-1,4-bis(trimethylsilyl)-1,3-butadiene.

Examples of the anionic ligand include alkoxy groups such as methoxy and tert-butoxy; aryl oxy groups such as phenoxy; carboxylate groups such as acetate and benzoate; and sulfonate groups such as mesylate and tosylate.

Examples of the neutral ligand capable of coordinating with a lone electron pair include organophosphorus compounds such as trimethylphosphine, triethylphosphine, triphenylphosphine, and diphenylmethylphosphine; and ethers such as tetrahydrofuran (THF), diethyl ether, dioxane, and 1,2-dimethoxyethane.

A preferred aspect of Q is a halogen atom or an alkyl group having 1 to 5 carbon atoms.

n is an integer of 1 to 3, preferably 1 or 2, and more preferably 1. When n is the above-described value, the propylene/α-olefin copolymer to be produced can be efficiently obtained, which is thus preferable.

j is an integer of 1 to 4, preferably 2.

Preferred aspects for the configuration of the bridged metallocene compound represented by the formula [a2] or formula [a3], that is, R¹ to R¹⁰, R^{1b} to R^{12b}, M, n, Q, and j, have been described above. For the bridged metallocene compound (a), any combination of the respective suitable aspects is also a preferred aspect. Such a bridged metallocene compound can be suitably used to obtain a copolymer (A) having the above-described properties.

Examples of the bridged metallocene compound represented by the formula [a2] include diphenylmethylene(3-tert-butyl-5-ethylcyclopentadienyl)(2,7-di-tert-butylfluorenyl)zirconium dichloride.

Examples of the bridged metallocene compound represented by the formula [a3] include (8-octamethylfluoren-12'-yl-(2-(adamantan-1-yl)-8-methyl-3,3b,4,5,6,7,7a,8-octahydrocyclopenta[a]indene))zirconium dichloride, or the catalyst (b) described in JP6568082B. In this context, the octamethylfluorene refers to 1,1,4,4,7,7,10,10-octamethyl-2,3,4,7,8,9,10,12-octahydro-1H-dibenzo[b,h]fluorene.

Other examples of the bridged metallocene compound represented by the formula [a1] include compounds in which R^{A} and R^{B} may be the same as or different from each other and are substituted indenyl groups, and Y is a silicon atom. Examples of substituents in the substituted indenyl groups include halogen atoms, hydrocarbon groups, silicon-containing groups, and halogen-containing hydrocarbon groups, and specific examples thereof include the groups described as R¹, R², and others in the formula [a2] and the formula [a3]. Examples of R^{C}, R^{D}, and the MQⱼ moiety include groups similar to R⁹, R¹⁰, and the MQⱼ moiety described in the formula [a2] and formula [a3] sections. Examples of such a bridged metallocene compound include dimethylsilylene-bis{1-(2-n-propyl-4-phenanthrylindenyl)}zirconium dichloride and dimethylsilylene-bis{1-(2-n-propyl-4-phenanthrylindenyl)}hafnium dichloride.

### <<Compound (b)>>

The compound (b) is at least one type of compound selected from an organoaluminum oxy compound (b-1), an ionic compound (b-2) that reacts with the bridged metallocene compound (a) to form an ion pair, and an organoaluminum compound (b-3).

### (Organoaluminum oxy compound (b-1))

Examples of the organoaluminum oxy compound (b-1) include conventionally known aluminoxanes such as a compound represented by the following formula [b1] and a compound represented by the following formula [b2], a modified methylaluminoxane having a structure represented by the following formula [b3], and a boron-containing organoaluminum oxy compound represented by the following formula [b4].

The organoaluminum oxy compound (b-1) may be used singly or may be used in combination of two or more types thereof.

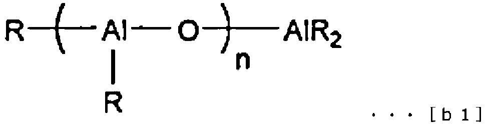

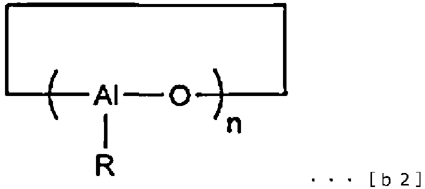

In the formula [b1] and the formula [b2], R is a hydrocarbon group having 1 to 10 carbon atoms, preferably a methyl group, a plurality of R may be the same as or different from each other, and n is an integer of 2 or more, preferably 3 or more, and more preferably 10 or more. Methylaluminoxanes in which R in the formula [b1] and the formula [b2] is a methyl group are suitably used.

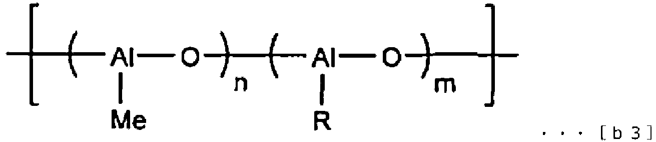

In the formula [b3], Me is a methyl group, R is a hydrocarbon group having 2 to 10 carbon atoms, and m and n are each independently an integer of 2 or more. A plurality of R may be the same as or different from each other. The modified methylaluminoxane [b3] can be prepared using trimethylaluminum and an alkylaluminum other than trimethylaluminum. Such a modified methylaluminoxane [b3] is generally referred to as MMAO (modified methylaluminoxane). Specifically, MMAO can be prepared by the methods described in US4960878B and US5041584B, for example.

Modified methylaluminoxane prepared using trimethylaluminum and triisobutylaluminum (that is, R in the formula [b3] is an isobutyl group) is also commercially produced under the trade names MMAO and TMAO by Tosoh Finechem Corporation, for example.

MMAO is an aluminoxane in which solubility in various solvents and storage stability are improved. Specifically, unlike compounds that are insoluble or poorly soluble in benzene, such as the compounds represented by the formula [b1] or the formula [b2], MMAO is soluble in aliphatic hydrocarbons, alicyclic hydrocarbons, aromatic hydrocarbons, and others.

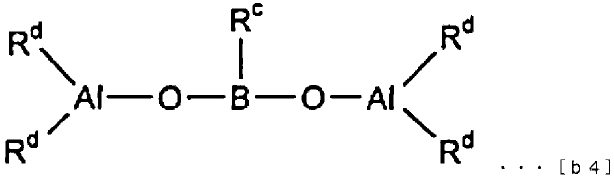

In the formula [b4], R^{c} is a hydrocarbon group having 1 to 10 carbon atoms, and a plurality of R^{d} are each independently a hydrogen atom, a halogen atom, or a hydrocarbon group having 1 to 10 carbon atoms. In the production method using the catalyst for olefin polymerization, the propylene/α-olefin copolymer can be produced even at a high temperature as will be described later. Accordingly, even benzene-insoluble or poorly benzene-soluble organoaluminum oxy compounds as exemplified in JPH2-78687A can be used. The organoaluminum oxy compound described in JPH2-167305A and the aluminoxane having two or more alkyl groups described in JPH3-103407A can also be suitably used.

The "benzene-insoluble or poorly benzene-soluble" organoaluminum oxy compounds refer to organoaluminum oxy compounds that are insoluble or poorly soluble in benzene, wherein the amount of the compound dissolved in benzene at 60°C is usually 10 mass% or less, preferably 5 mass% or less, and particularly preferably 2 mass% or less, in terms of Al atom.

### (Ionic compound (b-2))

Examples of the compound (b-2) that reacts with the bridged metallocene compound (a) to form an ion pair (hereinafter also referred to as "ionic compound (b-2)") include Lewis acids, ionic compounds, borane compounds, and carborane compounds described in, for example, JPH1-501950T, JPH1-502036T, JPH3-179005A, JPH3-179006A, JPH3-207703A, JPH3-207704A, JP2004-51676A, US5321106B, and others. Examples of the ionic compound (b-2) further include heteropoly compounds and isopoly compounds. Among these, a compound represented by the following formula [b5] is preferable.

The ionic compound (b-2) may be used singly or may be used in combination of two or more types thereof.

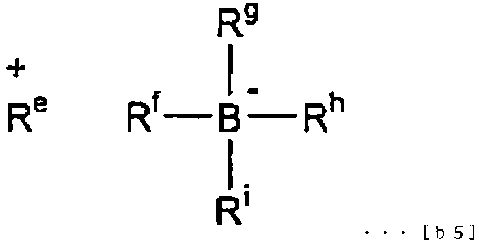

In the formula [b5], examples of R^{e+} include H⁺, an oxonium cation, a carbenium cation, an ammonium cation, a phosphonium cation, a cycloheptyltrienyl cation, and a ferrocenium cation having a transition metal. R^{f}, R^{g}, R^{h}, and Rⁱ each independently represent an organic group, and preferably represent an aryl group or a halogen-substituted aryl group.

Examples of the carbenium cation include tri-substituted carbenium cations such as triphenylcarbenium cation, tris(methylphenyl)carbenium cation, and tris(dimethylphenyl)carbenium cation.

Examples of the ammonium cation include trialkylammonium cations such as trimethylammonium cation, triethylammonium cation, tri(n-propyl)ammonium cation, triisopropylammonium cation, tri(n-butyl)ammonium cation, and triisobutylammonium cation; N,N-dialkylanilinium cations such as N,N-dimethylanilinium cation, N,N-diethylanilinium cation, and N,N,2,4,6-pentamethylanilinium cation; and dialkylammonium cations such as diisopropylammonium cation and dicyclohexylammonium cation.

Examples of the phosphonium cation include triarylphosphonium cations such as triphenylphosphonium cation, tris(methylphenyl)phosphonium cation, and tris(dimethylphenyl)phosphonium cation.

Among the above-exemplified cations, R^{e+} is preferably a carbenium cation or an ammonium cation, and particularly preferably triphenylcarbenium cation, N,N-dimethylanilinium cation, or N,N-diethylanilinium cation.

### • When R^{e+} is a carbenium cation (carbenium salt)

Examples of the carbenium salt include triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate, and tris(3,5-dimethylphenyl)carbenium tetrakis(pentafluorophenyl)borate.

### • When R^{e+} is an ammonium cation (ammonium salt)

Examples of the ammonium salt include trialkylammonium salts, N,N-dialkylanilinium salts, and dialkylammonium salts.

Specific examples of the trialkylammonium salts include triethylammonium tetraphenylborate, tripropylammonium tetraphenylborate, tri(n-butyl)ammonium tetraphenylborate, trimethylammonium tetrakis(p-tolyl)borate, trimethylammonium tetrakis(o-tolyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecylmethylammonium tetraphenylborate, dioctadecylmethylammonium tetrakis(p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis(4-trifluoromethylphenyl)borate, and dioctadecylmethylammonium tetrakis(3,5-ditrifluoromethylphenyl)borate.

Specific examples of the N,N-dialkylanilinium salts include N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N,2,4,6-pentamethylanilinium tetraphenylborate, and N,N,2,4,6-pentamethylanilinium tetrakis(pentafluorophenyl)borate.

Specific examples of the dialkylammonium salts include diisopropylammonium tetrakis(pentafluorophenyl)borate and dicyclohexylammonium tetraphenylborate.

### (Organoaluminum compound (b-3))

Examples of the organoaluminum compound (b-3) include an organoaluminum compound represented by the following formula [b6] and a complex alkylation product of a Group 1 metal of the periodic table and aluminum represented by the following formula [b7].

The organoaluminum compound (b-3) may be used singly or may be used in combination of two or more types thereof.

R^{a}ₘAl(OR^{b})ₙHₚX_{q} ... [b6]

In the formula [b6], R^{a} and R^{d} are each independently a hydrocarbon group having 1 to 15 carbon atoms, preferably 1 to 4 carbon atoms; X is a halogen atom; m is a number of 0 < m ≤ 3; n is a number of 0 ≤ n < 3; p is a number of 0 ≤ p < 3; q is a number of 0 ≤ q < 3; and m + n + p + q = 3.

M²AlR^{a}₄ ... [b7]

In the formula [b7], M² is Li, Na, or K; and a plurality of R^{a} are each independently a hydrocarbon group having 1 to 15 carbon atoms, preferably 1 to 4 carbon atoms.

Examples of the organoaluminum compound [b6] include tri-n-alkylaluminum such as trimethylaluminum, triethylaluminum, tri-n-butylaluminum, trihexylaluminum, and trioctylaluminum; tri-branched alkylaluminum such as triisopropylaluminum, triisobutylaluminum, tri-sec-butylaluminum, tri-tert-butylaluminum, tri-2-methylbutylaluminum, tri-3-methylhexylaluminum, and tri-2-ethylhexylaluminum; tricycloalkylaluminum such as tricyclohexylaluminum and tricyclooctylaluminum; triarylaluminum such as triphenylaluminum and tritolylaluminum; alkenylaluminum represented by the formula (i-C₄H₉)ₓAl_{y}(C₅H₁₀)_{z} (wherein x, y, and z are positive numbers and z ≤ 2x is satisfied) or the like, such as isoprenylaluminum; alkylaluminum alkoxide such as isobutylaluminum methoxide and isobutylaluminum ethoxide; dialkylaluminum alkoxide such as dimethylaluminum methoxide, diethylaluminum ethoxide, and dibutylaluminum butoxide; alkylaluminum sesquialkoxide such as ethylaluminum sesquiethoxide and butylaluminum sesquibutoxide; partially alkoxylated alkylaluminum having an average composition represented by the formula R^{a}_{2.5}Al(OR^{b})_{0.5} (wherein R^{a} and R^{b} have the same meanings as R^{a} and R^{b} in the formula [b6]); alkylaluminum aryloxide such as diethylaluminum phenoxide and diethylaluminum (2,6-di-tert-butyl-4-methylphenoxide); dialkylaluminum halide such as dimethylaluminum chloride, diethylaluminum chloride, dibutylaluminum chloride, diethylaluminum bromide, and diisobutylaluminum chloride; alkylaluminum sesquihalide such as ethylaluminum sesquichloride, butylaluminum sesquichloride, and ethylaluminum sesquibromide; partially halogenated alkylaluminum such as alkylaluminum dihalide including ethylaluminum dichloride; dialkylaluminum hydride such as diethylaluminum hydride, dibutylaluminum hydride, diisopropylaluminum hydride, and diisobutylaluminum hydride; partially hydrogenated alkylaluminum such as alkylaluminum dihydride including ethylaluminum dihydride and propylaluminum dihydride; and partially alkoxylated and halogenated alkylaluminum such as ethylaluminum ethoxychloride, butylaluminum butoxychloride, and ethylaluminum ethoxybromide.

Examples of the complex alkylation product [b7] include LiAl(C₂H₅)₄ and LiAl(C₇H₁₅)₄. Compounds similar to the complex alkylation product [b7] can also be used, and specific examples thereof include organoaluminum compounds in which two or more aluminum compounds are bonded via a nitrogen atom. Examples of such compounds include (C₂H₅)₂AlN(C₂H₅)Al(C₂H₅)₂.

As the organoaluminum compound (b-3), trimethylaluminum and triisobutylaluminum are preferable from the viewpoint of ease of availability.

### <<Carrier (c)>>

A carrier (c) may be used as a component of the catalyst for olefin polymerization. As the carrier (c), an inorganic compound or organic compound that is a granular or particulate solid is preferable.

The carrier (c) may be used singly or may be used in combination of two or more types thereof.

### (Inorganic compound)

Examples of the inorganic compound include porous oxides, inorganic halides, clay minerals, clays (which are usually composed of clay minerals as a main component), and ion-exchangeable layered compounds (most clay minerals are ion-exchangeable layered compounds).

Examples of the porous oxides include SiO₂, Al₂O₃, MgO, ZrO, TiO₂, B₂O₃, CaO, ZnO, BaO, and ThO₂; and composites or mixtures containing these oxides. Examples of the composites or mixtures include natural or synthetic zeolites, SiO₂-MgO, SiO₂-Al₂O₃, SiO₂-TiO₂, SiO₂-V₂O₅, SiO₂-Cr₂O₃, and SiO₂-TiO₂-MgO. Among these, a porous oxide containing either or both of SiO₂ and Al₂O₃ as the main component is preferable.

The properties of the porous oxide vary depending on the type and production method thereof; however, the particle diameter is preferably in the range of 10 to 300 µm, more preferably 20 to 200 µm; the specific surface area is preferably in the range of 50 to 1000 m²/g, more preferably 100 to 700 m²/g; and the pore volume is preferably in the range of 0.3 to 3.0 cm³/g. Such a porous oxide is used, if necessary, after being calcined at, for example, 100 to 1000°C, preferably 150 to 700°C.

Examples of the inorganic halides include MgCl₂, MgBr₂, MnCl₂, and MnBr₂. The inorganic halide may be used as it is, or may be used after being ground by means of a ball mill or a vibrating mill, for example. After dissolving the inorganic halide in a solvent such as an alcohol, a component precipitated in the form of fine particles by means of a precipitating agent may also be used.

As the clays, clay minerals, and ion-exchangeable layered compounds, not only natural products but also artificially synthesized products can be used. The ion-exchangeable layered compounds are compounds having a crystal structure in which planes constituted by ionic bonding or other bonding are stacked in parallel with weak bonding force, and are compounds in which the ions contained therein are exchangeable.

Specific examples of the clays and clay minerals include kaolin, bentonite, kibushi clay, gairome clay, allophane, hisingerite, pyrophyllite, mica group such as synthetic mica, montmorillonite group, vermiculite, chlorite group, palygorskite, kaolinite, nacrite, dickite, hectorite, taeniolite, and halloysite.

The clay and the clay mineral are also preferably subjected to a chemical treatment. The chemical treatment here used can be any treatment such as a surface treatment for removal of impurities attached to a surface, or a treatment having an effect on the crystal structure of the clay. Examples of the chemical treatment include an acid treatment, an alkali treatment, a salt treatment, and an organic substance treatment.

Examples of the ion-exchangeable layered compounds include ionic crystalline compounds having a layered crystal structure such as a hexagonal closest packing type, an antimony type, a CdCl₂ type, and a CdI₂ type. Specific examples of the ion-exchangeable layered compounds include crystalline acidic salts of polyvalent metals such as α-Zr(HAsO₄)₂·H₂O, α-Zr(HPO₄)₂, α-Zr(KPO₄)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂, and γ-Ti(NH₄PO₄)₂·H₂O.

The ion-exchangeable layered compound may also be a layered compound in which the interlayer is expanded by utilizing its ion exchangeability and exchanging exchangeable ions between the layers with other large bulky ions. Such bulky ions play a pillar-like role in supporting the layered structure and are usually referred to as pillars. For example, oxide pillars (pillars) can be formed between the layers by intercalating metal hydroxide ions described below between the layers of the layered compound and then heating and dehydrating. The introduction of another substance between the layers of the layered compound in this manner is referred to as intercalation.

Examples of the guest compound to be intercalated include cationic inorganic compounds such as TiCl₄ and ZrCl₄; metal alkoxides such as Ti(OR)₄, Zr(OR)₄, PO(OR)₃, and B(OR)₃ (R is a hydrocarbon group, for example); and metal hydroxide ions such as [Al₁₃O₄(OH)₂₄]⁷⁺, [Zr₄(OH)₁₄]²⁺, and [Fe₃O(OCOCH₃)₆]⁺. These guest compounds may be used singly or may be used in combination of two or more types thereof.

When intercalating the guest compound, a polymerization product obtained by hydrolysis and polycondensation of metal alkoxides such as Si(OR)₄, Al(OR)₃, and Ge(OR)₄ (R is a hydrocarbon group, for example), a colloidal inorganic compound such as SiO₂, and others may be allowed to coexist.

Among the inorganic compounds, the clay minerals and clays are preferable, and the montmorillonite group, vermiculite, hectorite, taeniolite, and synthetic mica are particularly preferable.

### (Organic compound)

Examples of the organic compound include granular or particulate solids having a particle diameter in the range of 10 to 300 µm. Specific examples of the organic compound include polymers synthesized using ethylene and an α-olefin having 3 to 20 carbon atoms as the main components; polymers synthesized using vinylcyclohexane or styrene as the main component; and modified products of these polymers.

### <<Organic compound component (d)>>

An organic compound component (d) may be used as a component of the catalyst for olefin polymerization. The organic compound component (d) is used, if necessary, for the purpose of improving the polymerization performance in the polymerization reaction of an α-olefin and the properties of the resulting copolymer, for example.

Examples of the organic compound component (d) include alcohols, phenolic compounds, carboxylic acids, phosphorus compounds, and sulfonates.

The organic compound component (d) may be used singly or may be used in combination of two or more types thereof.

### <<Configuration of catalyst for olefin polymerization>>

When carrying out polymerization of an olefin using the catalyst for olefin polymerization, it is preferable that the amounts of the respective components used that can constitute the catalyst for olefin polymerization are as follows, or it is preferable that the amounts are set as follows.
(1) When carrying out polymerization of an olefin using the catalyst for olefin polymerization, the bridged metallocene compound (a) is usually used in such an amount that it is 10⁻⁹ to 10⁻¹ mol, preferably 10⁻⁸ to 10⁻² mol, per 1 liter of reaction volume.
(2) When the organoaluminum oxy compound (b-1) is used as a component of the catalyst for olefin polymerization, the compound (b-1) is used in such an amount that the molar ratio [Al/M] of the aluminum atom (Al) in the compound (b-1) to all transition metal atoms (M) in the bridged metallocene compound (a) is preferably 0.01 to 5000, more preferably 0.05 to 2000.
(3) When the ionic compound (b-2) is used as a component of the catalyst for olefin polymerization, the compound (b-2) is used in such an amount that the molar ratio [(b-2)/M] of the compound (b-2) to all transition metal atoms (M) in the bridged metallocene compound (a) is preferably 1 to 10, more preferably 1 to 5.
(4) When the organoaluminum compound (b-3) is used as a component of the catalyst for olefin polymerization, the compound (b-3) is used in such an amount that the molar ratio [(b-3)/M] of the compound (b-3) to all transition metal atoms (M) in the bridged metallocene compound (a) is preferably 10 to 5000, more preferably 20 to 2000.
(5) When the organic compound component (d) is used as a component of the catalyst for olefin polymerization, if the compound (b) is the organoaluminum oxy compound (b-1), the organic compound component (d) is used in such an amount that the molar ratio [(d)/(b-1)] of the organic compound component (d) to the compound (b-1) is preferably 0.01 to 10, more preferably 0.1 to 5; if the compound (b) is the ionic compound (b-2), the organic compound component (d) is used in such an amount that the molar ratio [(d)/(b-2)] of the organic compound component (d) to the compound (b-2) is preferably 0.01 to 10, more preferably 0.1 to 5; and if the compound (b) is the organoaluminum compound (b-3), the organic compound component (d) is used in such an amount that the molar ratio [(d)/(b-3)] of the organic compound component (d) to the compound (b-3) is preferably 0.01 to 2, more preferably 0.005 to 1.

### <<Polymerization method>>

In the production of the copolymer (A), the polymerization can be performed by any of liquid-phase polymerization methods such as solution polymerization and suspension polymerization, or gas-phase polymerization methods.

In the liquid-phase polymerization methods, it is preferable to use an inert hydrocarbon medium. Examples of the inert hydrocarbon medium include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; and halogenated hydrocarbons such as ethylene chloride, chlorobenzene, and dichloromethane. The inert hydrocarbon medium may be used singly or may be used in combination of two or more types thereof. A so-called bulk polymerization method may also be used, in which a liquefied olefin itself that can be supplied to the polymerization is used as a solvent.

The polymerization temperature for the polymerization is preferably -50 to +200°C, more preferably 0 to +180°C. The polymerization pressure for the polymerization is preferably ordinary pressure to a gauge pressure of 10 MPa, more preferably ordinary pressure to a gauge pressure of 5 MPa.

The polymerization reaction can be carried out in any of batchwise, semi-continuous, and continuous methods. The polymerization can also be performed at two or more divided stages different in reaction conditions. The molecular weight of the resulting copolymer (A) can be regulated by allowing hydrogen or others to be present in the polymerization system, by changing the polymerization temperature, or by the amount of the compound (b) used.

When producing the copolymer (A), even under high temperature conditions advantageous in industrial production methods, the copolymer (A) having high stereoregularity can be produced while maintaining high catalyst activity. Examples of such high temperature conditions include conditions in which the polymerization temperature is preferably 40°C or higher, more preferably 40 to 200°C, still more preferably 45 to 150°C, and particularly preferably 50 to 150°C (in other words, particularly preferably a temperature at which industrialization is possible).

When producing the copolymer (A), the use of hydrogen is particularly preferable because the effect of improving the polymerization activity of the catalyst and the effect of increasing or decreasing the molecular weight of the resulting polymer may be achieved. When hydrogen is added into the polymerization system, the amount of hydrogen is preferably about 0.00001 to 100 NL per 1 mol of olefin. The hydrogen concentration in the polymerization system can be adjusted not only by controlling the amount of hydrogen supplied, but also by a method in which a reaction that generates or consumes hydrogen is carried out in the polymerization system, a method in which hydrogen is separated using a membrane, or by releasing a part of gas containing hydrogen out of the system.

When producing the copolymer (A), after synthesis by the above-described method, known post-treatment steps such as a catalyst deactivation step, a catalyst residue removal step, and a drying step may be carried out, if necessary.

### [Resin composition]

The resin composition of the present disclosure (hereinafter also referred to as "the present composition") contains the copolymer (A) of the present disclosure described above. The copolymer (A) contained in the present composition may be of one type or two or more types.

The present composition preferably further contains a propylene-based polymer (B) satisfying the following requirements (B1) and (B2) (hereinafter also referred to as "polymer (B)").

### <Propylene-based polymer (B)>

The propylene-based polymer (B) is a polymer other than the copolymer (A) and is not particularly limited as long as it satisfies the following requirements (B1) and (B2):
(B1) the melt flow rate (MFR) measured in accordance with ASTM D1238E at 230°C under a load of 2.16 kg is 0.1 to 500 g/10 min; and
(B2) the melting point (Tm) measured by a differential scanning calorimeter (DSC) is 110°C to 170°C.

When the present composition contains the polymer (B), the polymer (B) may be of one type or two or more types.

The polymer (B) may be, for example, a homopolymer of propylene (homopolypropylene), or a copolymer of propylene and an α-olefin having 2 to 20 carbon atoms other than propylene. The copolymer may be, for example, a random copolymer (random polypropylene) or a block copolymer (block polypropylene).

In one embodiment, the polymer (B) is preferably a homopolypropylene or a random polypropylene. In one embodiment, the polymer (B) is preferably a random polypropylene or a block polypropylene. The random polypropylene is, for example, a random copolymer of propylene and an α-olefin having 2 to 20 carbon atoms other than propylene.

The polymer (B) may include at least one type of constituent unit derived from a biomass-derived monomer. Examples of the biomass-derived monomer include biomass-derived ethylene, biomass-derived propylene, and biomass-derived α-olefins having 4 to 20 carbon atoms. The same type of monomer constituting the polymer may be only a biomass-derived monomer, may be only a fossil fuel-derived monomer, or may include both a biomass-derived monomer and a fossil fuel-derived monomer.

As the polymer (B), homopolypropylene is preferable in view of, for example, the ease of obtaining a shaped article having excellent heat resistance. As the polymer (B), a random copolymer is preferable in view of, for example, the ease of obtaining a shaped article having excellent transparency or impact characteristics, or a shaped article having excellent resistance to whitening and impact characteristics.

As the random copolymer, a copolymer of propylene and an α-olefin having 2 to 10 carbon atoms other than propylene is preferable, and specifically, a copolymer of propylene and ethylene, or a copolymer of propylene, ethylene, and an α-olefin having 4 to 10 carbon atoms is preferable.

In the random copolymer, the content of a constituent unit derived from propylene is preferably 90 mol% or more, more preferably 92 mol% or more, still more preferably 92.5 mol% or more, and preferably 99.9 mol% or less, more preferably 99.8 mol% or less, based on 100 mol% in total of a constituent unit derived from propylene and a constituent unit derived from an α-olefin having 2 to 20 carbon atoms other than propylene.

In the random copolymer, the content of a constituent unit derived from an α-olefin having 2 to 20 carbon atoms other than propylene is preferably 10 mol% or less, more preferably 8 mol% or less, still more preferably 7.5 mol% or less, and preferably 0.1 mol% or more, more preferably 0.2 mol% or more, based on 100 mol% in total of a constituent unit derived from propylene and a constituent unit derived from an α-olefin having 2 to 20 carbon atoms other than propylene.

The contents of the constituent units can be measured by ¹³C-NMR.

Examples of the α-olefin having 2 to 20 carbon atoms other than propylene include ethylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosene. The α-olefin having 2 to 20 carbon atoms other than propylene may be used singly or may be used in combination of two or more types thereof.

The random copolymer may further include an additional constituent unit other than the constituent unit derived from propylene and the constituent unit derived from an α-olefin having 2 to 20 carbon atoms other than propylene. Examples of polymerizable monomers that form the additional constituent units include vinyl compounds, vinyl esters, conjugated dienes, and non-conjugated polyenes.

The total content of the constituent unit derived from propylene and the constituent unit derived from an α-olefin having 2 to 20 carbon atoms other than propylene in the random copolymer is preferably 80 mass% or more, more preferably 85 mass% or more, still more preferably 90 mass% or more, even more preferably 95 mass% or more, and particularly preferably 98 mass% or more, based on the mass of the random copolymer.

The melt flow rate (MFR) of the polymer (B) is 0.1 to 500 g/10 min, preferably 0.5 g/10 min or more, more preferably 1 g/10 min or more, and preferably 300 g/10 min or less, more preferably 200 g/10 min or less, still more preferably 100 g/10 min or less, particularly preferably 90 g/10 min or less, 50 g/10 min or less, 30 g/10 min or less, or 10 g/10 min or less. That is, the MFR is preferably 0.5 to 300 g/10 min, more preferably 0.5 to 200 g/10 min, still more preferably 0.5 to 100 g/10 min, and particularly preferably 0.5 to 90 g/10 min.

When the MFR is within the above range, a composition having more excellent moldability can be easily obtained, and a composition or shaped article having excellent dispersibility of the polymer (B) and the copolymer (A) and having excellent mechanical strength such as tensile strength can be easily obtained.

The melting point (Tm) of the polymer (B) as measured by DSC is, in one embodiment, 110 to 170°C, preferably 120 to 170°C, more preferably 125 to 168°C, still more preferably 130 to 168°C, even more preferably 133 to 168°C, and particularly preferably 135 to 165°C. When the melting point is within the above range, the balance among moldability, heat resistance, and transparency is excellent, and the characteristics as crystalline polypropylene are good, which is preferable.

The melting point of the polymer (B) is a melting point (temperature at the peak top of a melting peak) observed using a DSC measurement apparatus, when the temperature is raised from room temperature to 200°C at a temperature raising rate of 10°C/min, held at 200°C for 10 minutes, cooled to -20°C at a temperature lowering rate of 10°C/min, held at -20°C for 1 minute, and then raised again to 200°C at a temperature raising rate of 10°C/min. The heat of fusion (ΔH), which is the integrated value of the melting peak, is preferably 50 to 120 J/g. In the case where two or more melting peaks are observed, the highest temperature among the peak top temperatures of these peaks is taken as the melting point.

The polymer (B) can be produced by various known methods using, for example, catalysts such as Ziegler-Natta-based catalysts and metallocene catalysts.

Hereinafter, a case of a resin composition containing the copolymer (A) and the polymer (B) will be described. In the present composition, when the total content of the copolymer (A) and the polymer (B) is taken as 100 mass%,
the content of the copolymer (A) is preferably 1 to 99 mass%, more preferably 5 to 95 mass%, still more preferably 6 to 93 mass%, even more preferably 8 to 90 mass%, and particularly preferably 12 to 70 mass%; and
the content of the polymer (B) is preferably 1 to 99 mass%, more preferably 5 to 95 mass%, still more preferably 7 to 94 mass%, even more preferably 10 to 92 mass%, and particularly preferably 30 to 88 mass%.

When the contents of the copolymer (A) and the polymer (B) are within the above ranges, a composition or shaped article having an excellent balance between flexibility and mechanical strength such as tensile strength can be easily obtained.

The total content of the copolymer (A) and the polymer (B) in the present composition can be set as appropriate depending on the intended use thereof and is not particularly limited. The total content of the copolymer (A) and the polymer (B) in the present composition may be, for example, 50 mass% or more, and may be 60 mass% or more, 70 mass% or more, 80 mass% or more, 90 mass% or more, or 95 mass% or more, based on the mass of the present composition.

### <Ethylene-based polymer (C)>

From the viewpoint of improving resistance to whitening during stretching in secondary processing such as deep draw forming, it is preferable that the present composition further contains an ethylene-based polymer (C) (hereinafter also referred to as "polymer (C)").

One embodiment of the present composition contains the copolymer (A), the propylene-based polymer (B), and the ethylene-based polymer (C). The present composition containing the ethylene-based polymer (C) in addition to the copolymer (A) and the propylene-based polymer (B) can easily provide a sealant film having an excellent balance between, in particular, impact resistance and transparency.

The ethylene-based polymer (C) is a polymer preferably having 60 to 100 mol% of a constituent unit derived from ethylene based on 100 mol% of the total amount of constituent units derived from polymerizable monomers.

The ethylene-based polymer (C) may include at least one type of constituent unit derived from a biomass-derived monomer. Examples of the biomass-derived monomer include biomass-derived ethylene and biomass-derived α-olefins having 3 to 20 carbon atoms. The same type of monomer constituting the polymer may be only a biomass-derived monomer, may be only a fossil fuel-derived monomer, or may include both a biomass-derived monomer and a fossil fuel-derived monomer.

When the present composition contains the polymer (C), the polymer (C) may be of one type or two or more types.

Examples of the ethylene-based polymer (C) include a high-pressure low-density polyethylene (c1) and an ethylene/α-olefin copolymer (c2). The ethylene-based polymer (C) preferably includes a high-pressure low-density polyethylene (c1) or an ethylene/α-olefin copolymer (c2). Hereinafter, these polymers will be described.

### <<High-pressure low-density polyethylene (c1)>>

As the high-pressure low-density polyethylene (c1), known high-pressure low-density polyethylene can be used without restriction. The high-pressure low-density polyethylene is polyethylene that is obtained generally by radical polymerization of ethylene at a high temperature and high pressure. The method for producing the high-pressure low-density polyethylene is not particularly limited, and examples thereof include a radical polymerization method in which ethylene is subjected to radical polymerization under conditions of 500 to 2000 atm and 150 to 300°C. Examples of a polymerization initiator include organic peroxides.

The high-pressure low-density polyethylene (c1) has a density of preferably 900 to 925 kg/m³, and more preferably 910 to 925 kg/m³. A high-pressure low-density polyethylene (c1) having a density within the above range is excellent in, for example, stickiness resistance and flexibility. The density is measured at 25°C in accordance with ASTM D1505.

The melt flow rate (MFR) of the high-pressure low-density polyethylene (c1) is preferably 0.1 g/10 min or more, more preferably 0.5 g/10 min or more, and particularly preferably 1.0 g/10 min or more, and is preferably 50 g/10 min or less, more preferably 30 g/10 min or less, and particularly preferably 20 g/10 min or less, and is, for example, 0.1 to 50 g/10 min. A high-pressure low-density polyethylene (c1) having an MFR within the above range is excellent in, for example, moldability and heat resistance. The MFR is measured under conditions of 190°C and a load of 2.16 kg in accordance with ASTM D1238E.

The melting point (Tm) of the high-pressure low-density polyethylene (c1) as measured by DSC is preferably 104 to 130°C, more preferably 105 to 125°C, and still more preferably 106 to 120°C. A high-pressure low-density polyethylene (c1) having a melting point within the above range is excellent in, for example, stickiness resistance, heat resistance, and flexibility.

The melting point of the high-pressure low-density polyethylene (c1) is a melting point (temperature at the peak top of a melting peak) observed using a DSC, when the temperature is raised from room temperature to 200°C at a temperature raising rate of 10°C/min, held at 200°C for 10 minutes, cooled to -20°C at a temperature lowering rate of 10°C/min, held at -20°C for 1 minute, and then raised again to 200°C at a temperature raising rate of 10°C/min. In the case where two or more melting peaks are observed, the highest temperature among the peak top temperatures of these peaks is taken as the melting point.

It is preferable that the high-pressure low-density polyethylene (c1) is a polymer having 100 mol% of a constituent unit derived from ethylene based on 100 mol% of the total amount of constituent units derived from polymerizable monomers.

### <<Ethylene/α-olefin copolymer (c2)>>

The ethylene/α-olefin copolymer (c2) includes at least a constituent unit derived from ethylene and a constituent unit derived from an α-olefin having 3 to 20 carbon atoms.

The content of the constituent unit derived from ethylene in the ethylene/α-olefin copolymer (c2) is preferably 60 to 99 mol%, more preferably 65 to 99 mol%, still more preferably 70 to 99 mol%, and particularly preferably 80 to 99 mol%. An ethylene/α-olefin copolymer (c2) having a content of the constituent unit derived from ethylene within the above range is excellent in, for example, stickiness resistance, heat resistance, and flexibility.

The ethylene/α-olefin copolymer (c2) has a smaller number of long-chain branched structures as compared to the high-pressure low-density polyethylene (c1), and sometimes typically referred to as linear low-density polyethylene (LLDPE).

The content of the constituent unit derived from an α-olefin having 3 to 20 carbon atoms in the ethylene/α-olefin copolymer (c2) is preferably 1 to 40 mol%, more preferably 1 to 35 mol%, still more preferably 1 to 30 mol%, and particularly preferably 1 to 20 mol%. An ethylene/α-olefin copolymer (c2) having a content of the constituent unit derived from an α-olefin having 3 to 20 carbon atoms within the above range is excellent in, for example, stickiness resistance, heat resistance, and flexibility.

In the ethylene/α-olefin copolymer (c2), the content of each of the above-described constituent units is an amount based on 100 mol% in total of the constituent unit derived from ethylene and the constituent unit derived from an α-olefin having 3 to 20 carbon atoms. When the content of each of the above-described constituent units is within the above range, for example, a sealant film having an excellent balance between impact resistance and flexibility can be easily obtained.

Examples of the α-olefin having 3 to 20 carbon atoms include propylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosene. Among these, α-olefins having 3 to 10 carbon atoms are preferable, α-olefins having 3 to 8 carbon atoms are more preferable, and α-olefins having 3 to 6 carbon atoms are still more preferable. Specifically, propylene, 1-butene, and 1-octene are preferable; propylene and 1-butene are more preferable; and propylene is still more preferable.

In the production of the ethylene/α-olefin copolymer (c2), the α-olefin having 3 to 20 carbon atoms may be used singly or may be used in combination of two or more types thereof. The ethylene/α-olefin copolymer (c2) includes at least one type of constituent unit derived from an α-olefin having 3 to 20 carbon atoms, and may include two or more types thereof.

The ethylene/α-olefin copolymer (c2) may include, in addition to the above-described constituent units, one type or two or more types of constituent units derived from additional polymerizable monomers as long as the purpose of the present disclosure is not hindered. Examples of such additional polymerizable monomers include vinyl compounds such as styrene, vinylcyclopentene, vinylcyclohexane, and vinylnorbornane; vinyl esters such as vinyl acetate; unsaturated organic acids or derivatives thereof, such as maleic anhydride; and non-conjugated polyenes such as dicyclopentadiene, cyclohexadiene, and 5-ethylidene-2-norbornene.

The total content of the constituent unit derived from ethylene and the constituent unit derived from an α-olefin having 3 to 20 carbon atoms in the ethylene/α-olefin copolymer (c2) is preferably 80 mass% or more, more preferably 85 mass% or more, still more preferably 90 mass% or more, even more preferably 95 mass% or more, and particularly preferably 98 mass% or more, based on the mass of the copolymer (c2).

Examples of the ethylene/α-olefin copolymers (c2) include ethylene/propylene copolymers, ethylene/1-butene copolymers, ethylene/propylene/1-butene copolymers, ethylene/propylene/ethylidene norbornene copolymers, ethylene/1-butene/1-octene copolymers, ethylene/4-methyl-1-pentene copolymers, ethylene/1-hexene copolymers, and ethylene/1-octene copolymers. Among these, for example, ethylene/propylene copolymers and ethylene/1-butene copolymers are preferable.

The density of the ethylene/α-olefin copolymer (c2) is preferably 840 kg/m³ or more, more preferably 850 kg/m³ or more, and particularly preferably 855 kg/m³ or more, and is preferably 940 kg/m³ or less, more preferably 899 kg/m³ or less, still more preferably 890 kg/m³ or less, and particularly preferably 885 kg/m³ or less, and is, for example, 840 to 940 kg/m³. The present composition containing a copolymer (c2) having a density within the above range has an excellent balance among impact resistance, rigidity, and transparency, for example. The density is measured at 25°C in accordance with ASTM D1505.

The melt flow rate (MFR) of the ethylene/α-olefin copolymer (c2) is preferably 0.01 g/10 min or more, more preferably 0.1 g/10 min or more, and is preferably 40 g/10 min or less, more preferably 20 g/10 min or less, and particularly preferably 10 g/10 min or less, and is, for example, 0.01 to 40 g/10 min. The present composition containing a copolymer (c2) having an MFR within the above range has an excellent balance among impact resistance, rigidity, and transparency, for example. The MFR is measured under conditions of 190°C and a load of 2.16 kg in accordance with ASTM D1238E.

In the ethylene/α-olefin copolymer (c2), the ratio (MFR₁₀/MFR₂) of MFR₁₀ measured under conditions of 190°C and a load of 10 kg to MFR₂ measured under conditions of 190°C and a load of 2.16 kg in accordance with ASTM D1238E is preferably 4.0 or more, more preferably 5.0 or more, and is preferably 8.0 or less, more preferably 7.0 or less, and is, for example, 4.0 to 8.0. The present composition containing a copolymer (c2) having an MFR₁₀/MFR₂ within the above range has an excellent balance between transparency and impact resistance, for example.

The melting point (Tm) of the ethylene/α-olefin copolymer (c2) measured by DSC is preferably 30 to 100°C, more preferably 31 to 90°C, and still more preferably 32 to 80°C. The present composition containing a copolymer (c2) having a melting point within the above range has an excellent balance between transparency and impact resistance, for example. The details of the measurement conditions for the melting point are as described in the section for the high-pressure low-density polyethylene (c1).

The ethylene/α-olefin copolymer (c2) can be produced by a conventionally known method using, for example, a vanadium-based catalyst, a titanium-based catalyst, or a metallocene-based catalyst. Preferably, by using a metallocene-based catalyst, an ethylene/α-olefin copolymer (c2) having a narrow molecular weight distribution and composition distribution can be obtained. Such a copolymer (c2) is, for example, more suitable in terms of mechanical properties, transparency, and impact resistance.

Hereinafter, a case of a resin composition containing the copolymer (A), the propylene-based polymer (B), and the ethylene-based polymer (C) will be described. When the total content of the copolymer (A), the polymer (B), and the polymer (C) is taken as 100 mass%, it is preferable that the content of the copolymer (A) is 1 to 98 mass%, the content of the polymer (B) is 1 to 98 mass%, and the content of the polymer (C) is 1 to 20 mass%.

The content of the copolymer (A) is preferably 1 to 98 mass%, more preferably 5 to 78 mass%, still more preferably 10 to 57 mass%, and particularly preferably 15 to 45 mass%, based on 100 mass% of the total content of the copolymer (A), the polymer (B), and the polymer (C). A resin composition having a content of the copolymer (A) within the above range tends to have an excellent balance among heat resistance, tensile strength, and resistance to whitening.

The content of the propylene-based polymer (B) is preferably 1 to 98 mass%, more preferably 20 to 93 mass%, still more preferably 40 to 87 mass%, and particularly preferably 50 to 80 mass%, based on 100 mass% of the total content of the copolymer (A), the polymer (B), and the polymer (C). A resin composition having a content of the polymer (B) within the above range tends to have an excellent balance among heat resistance, tensile strength, and resistance to whitening.

The content of the ethylene-based polymer (C) is preferably 1 to 20 mass%, more preferably 2 to 19 mass%, still more preferably 3 to 18 mass%, and particularly preferably 5 to 15 mass%, based on 100 mass% of the total content of the copolymer (A), the polymer (B), and the polymer (C). A resin composition having a content of the polymer (C) within the above range tends to have an excellent balance among heat resistance, tensile strength, and resistance to whitening.

The total content of the copolymer (A), the propylene-based polymer (B), and the ethylene-based polymer (C) in the present composition can be set as appropriate depending on the intended use thereof and is not particularly limited. The total content of the copolymer (A), the propylene-based polymer (B), and the ethylene-based polymer (C) in the present composition may be, for example, 50 mass% or more, and may be 60 mass% or more, 70 mass% or more, 80 mass% or more, 90 mass% or more, or 95 mass% or more, based on the mass of the present composition.

One embodiment of the present composition contains the copolymer (A), the propylene-based polymer (B), and the ethylene-based polymer (C). The resin composition of the above-described embodiment can form a layer or a film having an excellent balance among heat resistance, tensile strength, and resistance to whitening during stretching in secondary processing such as deep draw forming. A single-layered or multi-layered film including a layer formed from the resin composition of the above-described embodiment is excellent in resistance to whitening during stretching and has good heat resistance and tensile strength, and therefore can be suitably used as, for example, a package for daily necessities, foods, liquids, pharmaceuticals, electronic components, building materials, and lithium ion batteries.

### <Additive>

The present composition may further contain an additive as long as the purpose of the present disclosure is not hindered. Examples of the additives include polyolefins other than the copolymer (A), the propylene-based polymer (B), and the ethylene-based polymer (C) or modified products thereof; weather resistance stabilizers such as ultraviolet absorbers and light stabilizers; heat stabilizers; antioxidants; anti-aging agents; antistatic agents; anti-slip agents; antiblocking agents; antifogging agents; nucleating agents (crystal nucleating agents); lubricants; pigments; dyes; fluidity modifiers; plasticizers such as mineral oil; foaming agents; foaming auxiliaries; hydrochloric acid absorbers; antibacterial agents; antifungal agents; and fillers.

The present composition may contain one type or two or more types of additives.

Each additive may be used singly or may be used in combination of two or more types thereof.

### <Method for producing present composition>

The method for producing the present composition is not particularly limited. The present composition can be produced by, for example, a method in which the propylene/α-olefin copolymer (A), the propylene-based polymer (B) if necessary, the ethylene-based polymer (C) if necessary, and other optional components such as the additive if necessary are mixed using, for example, a Henschel mixer, a V-blender, a ribbon blender, a tumbler blender, or a kneader-ruder, or melt-kneaded using, for example, a single-screw extruder, a twin-screw extruder, a kneader, or a Banbury mixer after mixing or without mixing. Furthermore, for example, granulation or grinding may be performed if necessary. When these components are mixed or kneaded, the components to be blended may be added at a time or step by step.

The method for the melt-kneading is not particularly limited, and it is possible to perform the melt-kneading using a melt-kneading apparatus such as an extruder which is commercially available. For example, the temperature of a portion where kneading is performed in the melt-kneading apparatus may be 170 to 250°C, or may be 190 to 230°C. The kneading time may be 0.5 to 30 minutes, or may be 0.5 to 5 minutes.

### <Coating agent>

As an example of an application of the copolymer (A) or the present composition, a coating agent may be mentioned. The coating agent is not particularly limited, and examples thereof include a coating agent prepared by dissolving or dispersing the copolymer (A) or the present composition in an organic solvent. The coating agent contains the copolymer (A) or the present composition. In this case, the present composition is preferably a resin composition containing the propylene/α-olefin copolymer (A) and the propylene-based polymer (B).

Examples of the organic solvent include aromatic hydrocarbons such as benzene, toluene, and xylene; aliphatic hydrocarbons such as hexane, heptane, octane, and decane; alicyclic hydrocarbons such as cyclohexane, cyclohexene, methylcyclohexane, ethylcyclohexane, and decahydronaphthalene; alcohols such as methanol, ethanol, isopropyl alcohol, butanol, pentanol, hexanol, and propanediol; ketone-based solvents such as acetone, methyl isobutyl ketone, methyl ethyl ketone, pentanone, hexanone, isophorone, and acetophenone; cellosolves such as methyl cellosolve and ethyl cellosolve; esters such as methyl acetate, ethyl acetate, butyl acetate, methyl propionate, and butyl formate; and halogenated hydrocarbons such as trichloroethylene, dichloroethylene, and chlorobenzene. The organic solvent may be used singly or may be used in combination of two or more types thereof.

The content ratio of the organic solvent in the coating agent is not particularly limited, and for example, it may be 30 mass% or more, or may be 40 mass% or more, and may be 90 mass% or less, or may be 80 mass% or less.

The coating agent can be used as, for example, an adhesive or heat sealing agent between metals, an adhesive or heat sealing agent between polyolefins, or an adhesive or heat sealing agent between a metal and a polyolefin. Alternatively, it can also be used as an adhesive for PTP (press through pack) packaging, an adhesive for lamination, a raw material for paints, or a raw material for primers. In particular, a case where at least one of the adherends is a plastic material is suitable, and among plastic materials, polyolefin materials, particularly polybutene-based materials and polypropylene-based materials, are preferable.

### [Shaped article]

The shaped article of the present disclosure contains the copolymer (A) or the present composition.

The shaped article can be produced by forming the copolymer (A) or the present composition by a conventionally known forming method. Examples of the forming method include a sheet (film) forming method, a blow molding method, an injection molding method, a press molding method, an extrusion molding method, an inflation molding method, an extrusion blow molding method, an injection blow molding method, a vacuum molding method, a calender molding method, and a melt T-die casting method.

The shaped article is not particularly limited; however, since the copolymer (A) or the present composition exhibits the above-described effects, it is preferably a shaped article in which the above-described effects are further exhibited. Specific examples of the shaped article include films, sheets, injection-molded articles, and blow-molded articles. More specifically, examples of the shaped article include civil engineering and building material components such as multi-layered hoses, pipes, tubes, decorative sheets, and flooring mats; materials for covering electric wires and cables (such as insulation layers and sheath layers); nonwoven fabrics; stretch films; food packaging films; packaging sheets; food packaging trays and beverage cups (thermoformed from sheets); and plastic containers (formed by bending sheets).

The shaped article can be suitably used as, for example, a package for batteries such as a package for lithium ion batteries. That is, the present disclosure also provides an electrical storage device including the shaped article. Examples of the electrical storage device include lithium ion batteries and lithium ion capacitors.

### <Pellet>

The shaped article of the present disclosure may be a pellet. In the present specification, the pellet is regarded as being included in the shaped article because it is obtained by cutting the copolymer (A) or the present composition while extruding it.

The shape, size, and other properties of the pellet are not particularly limited and may be selected as appropriate depending on the intended use. The pellet can be produced by melting the copolymer (A) or the present composition with a kneader and granulating it. Examples of the kneader include a Banbury mixer, a roll, and an extruder.

### <Film>

The shaped article of the present disclosure may be, for example, a film. The film is not particularly limited, and the shape, size, thickness, and other properties may be selected as appropriate depending on the intended use. The film may be a stretched film or an unstretched film. The film may be a single-layered film or a multi-layered film. When the film is a multi-layered film, at least one layer thereof may be a layer containing the copolymer (A) or the present composition.

The thickness of the film (in the case of a multi-layered film, the total thickness) is preferably 5 to 150 µm, and more preferably 10 to 100 µm. In the present specification, the film and the sheet are not particularly distinguished from each other; however, usually, the film refers to a membrane-like material having a thickness of less than 250 µm, whereas the sheet refers to a thin plate-like material having a thickness of 250 µm or more.

Specific examples of the use of the film include packaging films for packaging foods, liquids, pharmaceuticals, and others.

### <Sheet>

The shaped article of the present disclosure may be, for example, a sheet. The sheet is not particularly limited, and the shape, size, thickness, and other properties may be selected as appropriate depending on the intended use. The sheet may be a single-layered sheet or a multi-layered sheet. When the sheet is a multi-layered sheet, at least one layer thereof may be a layer containing the copolymer (A) or the present composition.

The thickness of the sheet (in the case of a multi-layered sheet, the total thickness) is preferably 250 to 2000 µm, and more preferably 250 to 1500 µm.

Specific examples of the use of the sheet include packaging sheets for packaging foods, liquids, pharmaceuticals, and others, and containers formed from the sheet (such as trays or cups obtained by thermoforming the sheet, and containers obtained by bending the sheet).

### <Injection-molded article and blow-molded article>

The shaped article of the present disclosure may be, for example, an injection-molded article. The injection-molded article is not particularly limited, and examples thereof include molded articles produced by injection molding into a desired shape using a conventionally known injection molding apparatus under known conditions.

The injection-molded article can be widely used as, for example, automotive interior trim materials, automotive exterior parts, housings for household electric appliances, containers, tubes, or pipes.

The shaped article of the present disclosure may be, for example, a blow-molded article. The blow-molded article is not particularly limited, and examples thereof include molded articles produced by blow molding into a desired shape using a conventionally known blow molding apparatus under known conditions.

The blow-molded article may be, for example, a multi-layered molded article. In this case, at least one layer of the multi-layered molded article is a layer containing the copolymer (A) or the present composition.

Specific examples of the use of the injection-molded article and the blow-molded article include food containers, beverage containers, caps, pharmaceutical containers, various other containers, daily necessities, housings for household electric appliances, automotive parts, tubes, and pipes. Examples of the daily necessities include clothes storage cases, buckets, washbasins, stationery such as writing instruments, containers, toys, cooking utensils, and various other cases.

### <Sealant film>

As an example of the shaped article, a sealant film may be mentioned.

The sealant film includes at least one layer formed from the present composition (hereinafter also referred to as "layer (X)"). The sealant film may be a single-layered film or a multi-layered film having two or more layers. In this case, the present composition is preferably a resin composition containing the propylene/α-olefin copolymer (A) and the propylene-based polymer (B), or a resin composition containing the propylene/α-olefin copolymer (A), the propylene-based polymer (B), and the ethylene-based polymer (C).

The sealant film may include two or more layers of layer (X). The sealant film may include the layer (X) and a layer other than the layer (X) (additional layer). The sealant film may include two or more layers of the additional layers.

In the present specification, the film and the sheet are not particularly distinguished from each other; however, usually, the film refers to a membrane-like material having a thickness of less than 250 µm, whereas the sheet refers to a thin plate-like material having a thickness of 250 µm or more.

The shape, size, thickness, and other properties of the sealant film may be selected as appropriate depending on the intended use. The sealant film may be either a stretched film or an unstretched film, and is preferably an unstretched film. In the case where the unstretched film is multi-layered, the term "unstretched" means that none of the layers thereof are stretched.

The unstretched film is not particularly limited as long as it is a film that has not been stretched, and the shape, size, thickness, and other properties may be selected as appropriate depending on the intended use. The unstretched film may be a single-layered film or a multi-layered film having two or more layers. In the case where the unstretched film is multi-layered, at least one of the layers may be the layer (X). That is, the unstretched film may be a single-layered or multi-layered film consisting of the layer (X), or may be a laminate including the layer (X) and a substrate. Specific examples of the substrate will be described later.

The thickness of the sealant film or the unstretched film (in the case where the film is multi-layered, the total thickness of the layers) is preferably 5 µm or more, more preferably 10 µm or more, still more preferably 20 µm or more, and preferably 150 µm or less, more preferably 130 µm or less, still more preferably 100 µm or less, for example, 5 to 150 µm.

Specific examples of the use of the sealant film or the unstretched film include packaging films for packaging foods, liquids, pharmaceuticals, electronic components, or others, and packaging materials obtained therefrom.

The sealant film or unstretched film can be produced by, for example, using at least the present composition and using a conventionally known single-layered or multi-layered film forming machine. The method for producing the unstretched film is not particularly limited as long as the purpose of the present disclosure is not hindered. Examples of the unstretched film include those obtained by a method in which co-extrusion is performed by a known method for forming a multi-layered film, such as a T-die film forming method and an inflation film forming method, and those obtained by a method in which a substrate is formed in advance and the layer (X) is further laminated on the substrate. The unstretched film may also be obtained by a production method including a step of laminating a single-layered or multi-layered film including at least one layer of layer (X) (for example, a single-layered or multi-layered film consisting of the layer (X)) and a substrate by one selected from the group consisting of a melt extrusion lamination method, a thermal lamination method, and a dry lamination method.

### <Laminate>

As an example of the shaped article, a laminate may be mentioned.

The laminate includes a substrate and a layer formed from the present composition (layer (X)). In this case, the present composition is preferably a resin composition containing the propylene/α-olefin copolymer (A) and the propylene-based polymer (B), or a resin composition containing the propylene/α-olefin copolymer (A), the propylene-based polymer (B), and the ethylene-based polymer (C).

In one embodiment, the laminate includes a substrate and the above-described sealant film. In the laminate, for example, the substrate and the sealant film are laminated.

Examples of the substrate include a resin film, a metal foil, paper, and a vapor-deposited film. Examples of resins constituting the resin film include thermoplastic resins, and specifically, polyolefin resins (for example, polyethylene, polypropylene), polystyrene resins, polyester resins (for example, polyethylene terephthalate (PET)), polyamide resins, polyimide resins, polycarbonate resins, polyarylate resins, acrylic resins, polyphenylene sulfide resins, vinyl resins, polyvinyl chloride resins, and epoxy resins. The resin film may be a single-layered film or a multi-layered film having two or more layers. The resin film may be a stretched film or an unstretched film. Examples of the metal foil include aluminum foil, steel foil, and stainless steel foil, with aluminum foil being preferable.

The substrate is preferably at least one selected from the group consisting of a polyolefin film, a polystyrene film, a polyester film, a polyamide film, a laminated film of a polyolefin film and a gas barrier resin film, a metal foil such as aluminum foil, paper, and a vapor-deposited film.

The laminate can be produced by, for example, using a conventionally known single-layered or multi-layered film forming machine. The laminate can be produced by, for example, a production method including a step of laminating the substrate and the sealant film by one selected from the group consisting of a melt extrusion lamination method, a thermal lamination method, and a dry lamination method. The laminate can also be produced by a production method including a step of laminating the substrate and a single-layered or multi-layered film consisting of the layer (X) by one selected from the group consisting of a melt extrusion lamination method, a thermal lamination method, and a dry lamination method.

The laminate itself may be used as a sealant film. In this case, the substrate is preferably a resin film, and more preferably an unstretched film. That is, the sealant film may be a single-layered or multi-layered film consisting of the layer (X), or may be a laminate including the layer (X) and the substrate.

The sealant film and the laminate exhibit excellent resistance to whitening during stretching, and have good heat resistance and tensile strength. Therefore, taking advantage of the characteristics of the sealant film, they can be suitably used as packages for a wide variety of articles such as daily necessities, foods (food packaging materials), liquids, pharmaceuticals, electronic components, and building materials.

The sealant film or the laminate may be included in an electrical storage device such as a lithium ion battery or a lithium ion capacitor. The sealant film or the laminate can be suitably used as, for example, a package for lithium ion batteries. When viewed from another angle, the present disclosure can also be said to provide an electrical storage device including the present composition. Examples of such an electrical storage device include electrical storage devices including the sealant film or the laminate, and specific examples thereof include packages for lithium ion batteries including the sealant film or the laminate.

A lithium ion battery usually includes therein a positive electrode, a negative electrode, a separator located between the positive electrode and the negative electrode, and a non-aqueous electrolytic solution. The positive electrode usually includes a positive electrode current collector composed of a metal material, a carbon material, or another material, and as a positive electrode active material, a positive electrode material capable of occluding and releasing lithium, such as a composite oxide containing lithium and a transition metal. The negative electrode usually includes a negative electrode current collector composed of a carbon material or another material, and as a negative electrode active material, a negative electrode material capable of occluding and releasing lithium ions, such as metal lithium, a lithium-containing alloy, or a metal or an alloy capable of alloying with lithium. The non-aqueous electrolytic solution contains a lithium salt as an electrolyte and a non-aqueous solvent. In the lithium ion battery, the positive electrode, the negative electrode, and the separator are impregnated with the non-aqueous electrolytic solution. Details of the non-aqueous solvent will be described later in the section of <Non-aqueous solvent>.

In many cases, the lithium ion battery has a package (package for lithium ion batteries) on the peripheral edge thereof. The positive electrode, the negative electrode, the separator, and the non-aqueous electrolytic solution are encapsulated inside the package. In a usual case, a positive electrode terminal and a negative electrode terminal are connected to the positive electrode and the negative electrode, respectively. A part of the positive electrode terminal and a part of the negative electrode terminal are exposed on the outside of the package.

A case in which the sealant film or the laminate is used as the package will be described below. A lithium ion battery is obtained by sandwiching the positive electrode and the negative electrode between a pair of sealant films or a pair of laminates, and heat-sealing the peripheral edge portions of the pair of sealant films or the pair of laminates such that a part of the positive electrode terminal and a part of the negative electrode terminal are exposed on the outside of the pair of sealant films or the pair of laminates. In the case where the laminate is used as the package, the laminate may include a substrate composed of a metal such as aluminum foil.

Lithium ion batteries with the package for lithium ion batteries can be used for, for example, handheld electronic devices, personal computers, robots, drones, automobiles, aircrafts, wearable devices, and electrical storage systems (ESSs) for household use or for renewable energy power generation.

### <Non-aqueous solvent>

The non-aqueous electrolytic solution for lithium ion batteries generally contains a non-aqueous solvent.

As the non-aqueous solvent, various known non-aqueous solvents can be selected as appropriate. As the non-aqueous solvent, it is preferable to use at least one selected from the group consisting of cyclic aprotic solvents and chain aprotic solvents. It is preferable to use a cyclic aprotic solvent as the non-aqueous solvent in the case where it is intended to raise the flash point of the solvent in order to improve the safety of the battery.

### (Cyclic aprotic solvent)

Examples of the cyclic aprotic solvent include cyclic carbonates, cyclic carboxylic acid esters, cyclic sulfones, and cyclic ethers.

The cyclic aprotic solvent may be used singly, or two or more types thereof may be mixed for use.

The content ratio of the cyclic aprotic solvent in the non-aqueous solvent is preferably 10 to 100 mass%, more preferably 20 to 90 mass%, and still more preferably 30 to 80 mass%. By setting such a content ratio, for example, the conductivity of the electrolytic solution related to the charge/discharge characteristics of the battery can be enhanced.

Examples of the cyclic carbonates include ethylene carbonate, propylene carbonate, 1,2-butylene carbonate, 2,3-butylene carbonate, 1,2-pentylene carbonate, and 2,3-pentylene carbonate. Among these, ethylene carbonate and propylene carbonate, which have a high dielectric constant, are preferable. In the case of batteries in which graphite is used for a negative electrode active material, ethylene carbonate is more preferable. Two or more types of the cyclic carbonates may be mixed for use.

Examples of the cyclic carboxylic acid esters include γ-butyrolactone, δ-valerolactone, and alkyl substitution products such as methyl-γ-butyrolactone, ethyl-γ-butyrolactone, and ethyl-δ-valerolactone.

The cyclic carboxylic acid esters have a low vapor pressure, a low viscosity, and a high dielectric constant, and can decrease the viscosity of an electrolytic solution without lowering the flash point of the electrolytic solution and the dissociation degree of the electrolyte. Therefore, the cyclic carboxylic acid esters have a characteristic that the conductivity of an electrolytic solution which is an index related to the charge/discharge characteristics of the battery can be enhanced without increasing the inflammability of the electrolytic solution. For this reason, it is preferable to use a cyclic carboxylic acid ester as the cyclic aprotic solvent in the case where it is intended to raise the flash point of the solvent. γ-Butyrolactone is most preferable.

It is preferable that the cyclic carboxylic acid ester is used as a mixture with another cyclic aprotic solvent and/or a chain aprotic solvent. For example, a mixture (combination) of the cyclic carboxylic acid ester and a cyclic carbonate and/or a chain carbonate may be mentioned.

Examples of the combination of the cyclic carboxylic acid ester and the cyclic carbonate and/or chain carbonate include γ-butyrolactone and ethylene carbonate; γ-butyrolactone, ethylene carbonate, and dimethyl carbonate; γ-butyrolactone, ethylene carbonate, and methyl ethyl carbonate; γ-butyrolactone, ethylene carbonate and diethyl carbonate; γ-butyrolactone and propylene carbonate; γ-butyrolactone, propylene carbonate, and dimethyl carbonate; γ-butyrolactone, propylene carbonate, and methyl ethyl carbonate; γ-butyrolactone, propylene carbonate, and diethyl carbonate; γ-butyrolactone, ethylene carbonate, and propylene carbonate; γ-butyrolactone, ethylene carbonate, propylene carbonate, and dimethyl carbonate; γ-butyrolactone, ethylene carbonate, propylene carbonate, and methyl ethyl carbonate; γ-butyrolactone, ethylene carbonate, propylene carbonate, and diethyl carbonate; γ-butyrolactone, ethylene carbonate, dimethyl carbonate, and methyl ethyl carbonate; γ-butyrolactone, ethylene carbonate, dimethyl carbonate, and diethyl carbonate; γ-butyrolactone, ethylene carbonate, methyl ethyl carbonate, and diethyl carbonate; γ-butyrolactone, ethylene carbonate, dimethyl carbonate, methyl ethyl carbonate, and diethyl carbonate; γ-butyrolactone, ethylene carbonate, propylene carbonate, dimethyl carbonate, and methyl ethyl carbonate; γ-butyrolactone, ethylene carbonate, propylene carbonate, dimethyl carbonate, and diethyl carbonate; γ-butyrolactone, ethylene carbonate, propylene carbonate, methyl ethyl carbonate, and diethyl carbonate; γ-butyrolactone, ethylene carbonate, propylene carbonate, dimethyl carbonate, methyl ethyl carbonate, and diethyl carbonate; γ-butyrolactone and sulfolane; γ-butyrolactone, ethylene carbonate, and sulfolane; γ-butyrolactone, propylene carbonate, and sulfolane; γ-butyrolactone, ethylene carbonate, propylene carbonate, and sulfolane; and γ-butyrolactone, sulfolane, and dimethyl carbonate.

Examples of the cyclic sulfones include sulfolane, 2-methylsulfolane, 3-methylsulfolane, dimethyl sulfone, diethyl sulfone, dipropyl sulfone, methyl ethyl sulfone, and methyl propyl sulfone.

Examples of the cyclic ethers include dioxolane.

### (Chain aprotic solvent)

Examples of the chain aprotic solvent include chain carbonates, chain carboxylic acid esters, chain ethers, and chain phosphoric acid esters.

The chain aprotic solvent may be used singly, or two or more types thereof may be mixed for use.

The content ratio of the chain aprotic solvent in the non-aqueous solvent is preferably 10 to 100 mass%, more preferably 20 to 90 mass%, and still more preferably 30 to 80 mass%.

Examples of the chain carbonates include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyl trifluoroethyl carbonate. Two or more types of the chain carbonates may be mixed for use.

Examples of the chain carboxylic acid esters include methyl pivalate.

Examples of the chain ethers include dimethoxy ethane.

Examples of the chain phosphoric acid esters include trimethyl phosphate.

### (Combination of solvents)

The non-aqueous solvent contained in the non-aqueous electrolytic solution may be of only one type or two or more types.

Only one type or multiple types of cyclic aprotic solvents may be used, only one type or multiple types of chain aprotic solvents may be used, or a cyclic aprotic solvent and a chain protic solvent may be mixed for use. In the case where it is particularly intended to improve the load characteristics and low temperature characteristics of the battery, it is preferable to use a cyclic aprotic solvent and a chain aprotic solvent in combination as the non-aqueous solvent.

From the viewpoint of the electrochemical stability of the electrolytic solution, it is most preferable to use a cyclic carbonate as the cyclic aprotic solvent and a chain carbonate as the chain aprotic solvent. The conductivity of the electrolytic solution related to the charge/discharge characteristics of the battery can also be enhanced by a combination of a cyclic carboxylic acid ester and a cyclic carbonate and/or a chain carbonate.

Examples of the combination of the cyclic carbonate and the chain carbonate include ethylene carbonate and dimethyl carbonate; ethylene carbonate and methyl ethyl carbonate; ethylene carbonate and diethyl carbonate; propylene carbonate and dimethyl carbonate; propylene carbonate and methyl ethyl carbonate; propylene carbonate and diethyl carbonate; ethylene carbonate, propylene carbonate, and methyl ethyl carbonate; ethylene carbonate, propylene carbonate, and diethyl carbonate; ethylene carbonate, dimethyl carbonate, and methyl ethyl carbonate; ethylene carbonate, dimethyl carbonate, and diethyl carbonate; ethylene carbonate, methyl ethyl carbonate, and diethyl carbonate; ethylene carbonate, dimethyl carbonate, methyl ethyl carbonate, and diethyl carbonate; ethylene carbonate, propylene carbonate, dimethyl carbonate, and methyl ethyl carbonate; ethylene carbonate, propylene carbonate, dimethyl carbonate, and diethyl carbonate; ethylene carbonate, propylene carbonate, methyl ethyl carbonate, and diethyl carbonate; and ethylene carbonate, propylene carbonate, dimethyl carbonate, methyl ethyl carbonate, and diethyl carbonate.

The mixing ratio between the cyclic carbonate and the chain carbonate (cyclic carbonate : chain carbonate), expressed as a mass ratio, is preferably 5 : 95 to 80 : 20, and more preferably 10 : 90 to 70 : 30. By setting such a mixing ratio, an increase in the viscosity of the electrolytic solution can be suppressed and the dissociation degree of the electrolyte can be enhanced. Therefore, the conductivity of the electrolytic solution related to the charge/discharge characteristics of the battery can be enhanced, and the solubility of the electrolyte can be further enhanced. Accordingly, an electrolytic solution having excellent electrical conductivity at normal temperature or low temperature can be obtained, and therefore, the load characteristics of the battery at normal to low temperatures can be improved.

The lithium ion battery includes therein a non-aqueous electrolytic solution containing the non-aqueous solvent. From this, it is preferable that a package constituting the lithium ion battery (a package for lithium ion batteries) is unlikely to undergo elution into the non-aqueous solvent or swelling due to the non-aqueous solvent, and it is also preferable that the package is capable of maintaining a certain level of mechanical strength even when exposed to contact with the non-aqueous solvent. The sealant film and the laminate, each including a layer formed from the present composition, are excellent in resistance to whitening and, for example, are unlikely to undergo elution into the non-aqueous solvent or swelling due to the non-aqueous solvent, and are capable of maintaining a certain level of mechanical strength even when exposed to contact with the non-aqueous solvent. Accordingly, the sealant film and the laminate can be suitably used as a package for lithium ion batteries.

### Examples

Hereinafter, the propylene/α-olefin copolymer and the resin composition of the present disclosure will be described by way of Examples; however, the propylene/α-olefin copolymer and the resin composition of the present disclosure are not limited in any way to these Examples.

### [Example 1A] Production of propylene/α-olefin copolymer (A-1)

Into a continuous polymerization vessel having a volume of 300 liters, n-hexane was continuously supplied from one supply port in an amount of 20.9 L/h, and from another supply port, a mixed hexane solution of diphenylmethylene(3-tert-butyl-5-ethylcyclopentadienyl)(2,7-di-tert-butylfluorenyl)zirconium dichloride (catalyst species a), modified methylaluminoxane, and triisobutylaluminum (concentration in terms of zirconium: 0.6 mmol/L, concentration of modified methylaluminoxane in terms of aluminum: 154 mmol/L, and concentration of triisobutylaluminum in terms of aluminum: 62 mmol/L) was continuously supplied in an amount of 0.057 L/h. At the same time, into the continuous polymerization vessel, propylene, 4-methyl-1-pentene (4MP-1), and hydrogen were continuously supplied from another supply port in amounts of 13 kg/h, 3.1 kg/h, and 0.5 NL/h, respectively. Continuous solution polymerization was carried out under the conditions of a polymerization temperature of 60°C, a polymerization pressure of 1.0 MPaG, and a residence time of 1.5 hours, thereby obtaining a propylene/4-methyl-1-pentene copolymer (A-1).

### [Example 2A] Production of propylene/α-olefin copolymer (A-2)

A propylene/4-methyl-1-pentene copolymer (A-2) was produced in the same manner as in Example 1A except that propylene, 4-methyl-1-pentene, and hydrogen were continuously supplied in amounts of 8.8 kg/h, 3.5 kg/h, and 0.2 NL/h, respectively.

### [Example 3A] Production of propylene/α-olefin copolymer (A-3)

A propylene/4-methyl-1-pentene copolymer (A-3) was produced in the same manner as in Example 1A except that propylene, 4-methyl-1-pentene, and hydrogen were continuously supplied in amounts of 16 kg/h, 10 kg/h, and 2 NL/h, respectively.

### [Example 4A] Production of propylene/α-olefin copolymer (A-4)

Into a continuous polymerization vessel having a volume of 300 liters, n-hexane was continuously supplied from one supply port in an amount of 41.7 L/h, and from another supply port, a mixed hexane solution of (8-octamethylfluoren-12'-yl-(2-(adamantan-1-yl)-8-methyl-3,3b,4,5,6,7,7a,8-octahydrocyclopenta[a]indene))zirconium dichloride (catalyst species b) and modified methylaluminoxane (concentration in terms of zirconium: 0.2 mmol/L and concentration of modified methylaluminoxane in terms of aluminum: 61 mmol/L) and a hexane solution of triisobutylaluminum (concentration in terms of aluminum: 5.0 mmol/L) were continuously supplied in amounts of 0.17 L/h and 0.30 L/h, respectively. At the same time, into the continuous polymerization vessel, propylene, 4-methyl-1-pentene, and hydrogen were continuously supplied from another supply port in amounts of 9.8 kg/h, 2.8 kg/h, and 4 NL/h, respectively. Continuous solution polymerization was carried out under the conditions of a polymerization temperature of 70°C, a polymerization pressure of 0.7 MPaG, and a residence time of 1.5 hours, thereby obtaining a propylene/4-methyl-1-pentene copolymer (A-4).

### [Comparative Example 1A]

As Comparative Example 1A, a commercially available propylene/ethylene copolymer (hereinafter also referred to as "PER-1") (MFR (230°C, 2.16 kg load) = 8 g/10 min) was used.

### [Comparative Example 2A]

As Comparative Example 2A, a commercially available propylene/ethylene copolymer (hereinafter also referred to as "PER-2") (MFR (230°C, 2.16 kg load) = 7 g/10 min) was used.

### [Properties of propylene/α-olefin copolymers and others]

The property values of the propylene/α-olefin copolymers obtained in the Examples and the propylene/α-olefin copolymers and others used in the Comparative Examples were measured by the following methods. The results are shown in Table 1.

### <Propylene content and α-olefin content>

The propylene content and the comonomer (α-olefin) content in the propylene/α-olefin copolymer were calculated by performing ¹³C-NMR measurement under the following conditions and analyzing the obtained ¹³C-NMR spectrum. In the present specification, the content of a constituent unit derived from propylene is also referred to as "propylene content," and the content of a constituent unit derived from an α-olefin (other than propylene), which is a comonomer, is also referred to as "comonomer content". With respect to polymers other than the above-described copolymer, the content of each constituent unit was also calculated in accordance with the measurement method.
Apparatus: AVANCE III cryo-500 nuclear magnetic resonance spectrometer manufactured by Bruker BioSpin
Observed nucleus: ¹³C (125 MHz)
Measurement mode: single pulse proton broadband decoupling
Pulse width: 45° (5.00 µsec)
Number of points: 64k
Measurement range: 250 ppm (-55 to 195 ppm)
Repetition time: 5.5 sec
Number of scans: 128
Measurement solvent: ortho-dichlorobenzene/benzene-d₆ (4/1 [v/v])
Sample concentration: ca. 60 mg/0.6 mL
Measurement temperature: 120°C
Window function: exponential (BF: 1.0 Hz)
Chemical shift reference: benzene-d₆: 128 ppm

### <Density>

The density of the propylene/α-olefin copolymer and the ethylene-based polymer was measured at 25°C in accordance with ASTM D1505.

### <Intrinsic viscosity [η]>

The intrinsic viscosity [η] of the propylene/α-olefin copolymer was measured at 135°C in a decalin solvent using an Ubellohde's viscometer. About 20 mg of the propylene/α-olefin copolymer was dissolved in 15 mL of decalin, and the specific viscosity ηsp was measured in an oil bath heated to 135°C. 5 mL of a decalin solvent was added to this decalin solution for dilution, and then the specific viscosity ηsp was measured in the same manner. This dilution operation was repeated twice more, and the value of ηsp/C when the concentration (C) was extrapolated to zero was determined as an intrinsic viscosity [η] (see the following equation):$\left[η\right] = lim \left(ηsp/C\right) \left(C->0\right) .$

### <Melting point (Tm), heat of fusion (ΔH), and glass transition temperature (Tg)>

The melting point (Tm), heat of fusion (ΔH), and glass transition temperature (Tg) of the copolymers (A-1) to (A-4) of the Examples, and PER-1 and PER-2 of the Comparative Examples were measured by the following method. The melting point (Tm) of the polymers used as the propylene-based polymer (B-1) and the ethylene-based polymers (C-1) and (C-2) described later was measured by the above-described methods as the methods for measuring the melting point of the polymer (B) and the polymer (C), respectively.

Using a hydraulic heat press molding machine set at 190°C, the propylene/α-olefin copolymer was heated for 5 minutes, molded under pressurization at 7.5 MPa for 2 minutes, and then cooled under pressurization at 20°C and 7.5 MPa for 5 minutes to give a 500 µm-thick sheet.

After 7 days or more had elapsed at room temperature from molding, a specimen of about 10 mg was punched out from the sheet, cooled from room temperature to -40°C at a temperature lowering rate of 10°C/min under a nitrogen atmosphere, and held at that temperature for 5 minutes. Subsequently, the temperature was raised to 200°C at a temperature raising rate of 10°C/min and held at that temperature for 10 minutes. Subsequently, the temperature was cooled to -70°C at a temperature lowering rate of 10°C/min and held at that temperature for 1 minute. Subsequently, the temperature was raised to 200°C at a temperature raising rate of 10°C/min.

The heat of fusion (ΔH) was calculated from the integrated value of the crystal melting peak during the second temperature raising. The melting point (Tm) was defined as the temperature at the peak top of the crystal melting peak during the second temperature raising. The glass transition temperature (Tg) was defined as the temperature at which a baseline shift occurred during the second temperature raising. In the case where two or more melting peaks were observed, the highest temperature among the peak top temperatures of these peaks was taken as the melting point. When the heat of fusion (ΔH) and the melting point (Tm) were not observed, they are indicated as "ND".

### <Weight average molecular weight (Mw) and molecular weight distribution (Mw/Mn)>

Using a gel permeation chromatograph GPC-IR6_MCT model manufactured by Polymer Characterization as a GPC apparatus, the Mw and Mn in terms of polystyrene were measured under the following conditions, and Mw/Mn was calculated.

Separation column: two columns of TSKgel GNH6-HT manufactured by Tosoh Corporation and two columns of TSKgel GNH6-HTL manufactured by Tosoh Corporation (each of the columns has a size of 7.5 mm in diameter and 300 mm in length)
Column temperature: 140°C
Mobile phase: o-dichlorobenzene (manufactured by FUJIFILM Wako Pure Chemical Corporation) containing BHT (manufactured by Takeda Pharmaceutical Company Limited) at 0.025 wt% as an antioxidant
Movement rate: 1.0 mL/min
Sample concentration: 10 mg/10 mL
Sample injection volume: 400 µL
Detector: IR6 type MCT infrared detector
Column calibration: monodisperse polystyrene (manufactured by Tosoh Corporation)
Molecular weight conversion: polystyrene conversion / preparation calibration method

### <MFR>

The MFR of the propylene/α-olefin copolymer (A), the propylene-based polymer (B), and PER-1 and PER-2 was measured under conditions of 230°C and a load of 2.16 kg in accordance with ASTM D1238E. The MFR of the ethylene-based polymer (C) was measured under conditions of 190°C and a load of 2.16 kg in accordance with ASTM D1238E.

### <Tensile modulus and breaking stress>

Using a hydraulic heat press molding machine set at 190°C, the propylene/α-olefin copolymer was heated for 5 minutes, molded under pressurization at 7.5 MPa for 2 minutes, and then cooled under pressurization at 20°C and 7.5 MPa for 5 minutes to give a 2 mm-thick sheet (specimen).

After 7 days or more had elapsed at room temperature from molding, a dumbbell ASTM No. 4 was prepared from the sheet in accordance with ASTM D638, and the tensile modulus and breaking stress were measured for the dumbbell under conditions of 23°C and a tensile speed of 50 mm/min.

### <Shore D hardness (instantaneous value)>

Using a hydraulic heat press molding machine set at 190°C, the propylene/α-olefin copolymer was heated for 5 minutes, molded under pressurization at 7.5 MPa for 2 minutes, and then cooled under pressurization at 20°C and 7.5 MPa for 5 minutes to give a 2 mm-thick sheet. Three sheets were stacked to give a specimen.

After 7 days or more had elapsed at room temperature from molding, a durometer hardness tester (type D) was used, and the scale was read immediately after bringing the indenter into contact with the specimen (in accordance with ASTM D2240).

### <Shore A hardness (instantaneous value)>

Using a hydraulic heat press molding machine set at 190°C, the propylene/α-olefin copolymer was heated for 5 minutes, molded under pressurization at 7.5 MPa for 2 minutes, and then cooled under pressurization at 20°C and 7.5 MPa for 5 minutes to give a 2 mm-thick sheet. Three sheets were stacked to give a specimen.

After 7 days or more had elapsed at room temperature from molding, a durometer hardness tester (type A) was used, and the scale was read immediately after bringing the indenter into contact with the specimen (in accordance with ASTM D2240).

The propylene/α-olefin copolymers of Examples 1A to 4A exhibit either high breaking stress or low tensile modulus compared to the propylene/α-olefin copolymers of Comparative Examples 1A to 2A, and have an excellent balance between flexibility and strength. For example, when comparing an Example and a Comparative Example having similar tensile modulus, the Example exhibited higher breaking stress and superior strength compared to the Comparative Example.

**[Table 1]**

| | | Example 1A | Example 2A | Example 3A | Example 4A | Comparative Example 1A | Comparative Example 2A |
|---|---|---|---|---|---|---|---|
| Copolymer | | A-1 | A-2 | A-3 | A-4 | PER-1 | PER-2 |
| Polymerization temperature | °C | 60 | 60 | 60 | 70 | - | - |
| Catalyst species | - | a | a | a | b | - | - |
| Comonomer type | - | 4MP-1 | 4MP-1 | 4MP-1 | 4MP-1 | Ethylene | Ethylene |
| Comonomer content | mol% | 9.0 | 9.9 | 16.1 | 8.9 | 12.5 | 16.2 |
| Density | kg/m³ | 868 | 867 | 855 | 870 | 878 | 868 |
| [η] | dl/g | 2.09 | 1.95 | 1.98 | 2.03 | 1.74 | 1.68 |
| Tm | °C | 77.7 | 67.1 | ND | 79.3 | 74.4 | 59.6 |
| ΔH | J/g | 17.6 | 11.5 | ND | 27.7 | 35.4 | 19.4 |
| Tg | °C | -9.9 | -10.2 | -6.1 | -8.0 | -21.2 | -24.8 |
| Mw | - | 418,000 | 382,000 | 404,000 | 399,000 | 279,000 | 281,000 |
| Mw/Mn | - | 2.0 | 2.0 | 1.9 | 2.0 | 2.5 | 1.9 |
| MFR | g/10 min | 5.8 | 7.5 | 7.3 | 5.3 | 8.0 | 7.0 |
| Breaking stress | MPa | 30 | 29 | 19 | 32 | 26 | 24 |
| Tensile modulus | MPa | 90 | 68 | 5 | 163 | 139 | 63 |
| Shore D hardness (instantaneous value) | - | 45 | 46 | 17 | 52 | 46 | 37 |
| Shore A hardness (instantaneous value) | - | 93 | 92 | 58 | 96 | 96 | 91 |

### [Examples 1B to 5B and Comparative Examples 1B to 3B]

In Examples 1B to 5B and Comparative Examples 1B to 2B, using a single screw extruder of φ40 mm, various polymers were melt-kneaded under conditions of a melting temperature of 210°C and a rotation speed of 40 to 50 rpm in the amounts (parts by mass) shown in Table 2 to prepare resin compositions. In Comparative Example 3B, only the propylene-based polymer (B-1) was used. The propylene-based polymer (B-1) used in the Examples and Comparative Examples is as follows:
- Propylene-based polymer (B-1): random polypropylene (manufactured by Prime Polymer Co., Ltd., Prime Polypro F327, MFR (230°C, 2.16 kg load): 7.0 g/10 min, melting point: 140°C).

Except that the obtained resin compositions or the propylene-based polymer (B-1) were used, the tensile modulus and breaking stress were measured in the same manner as described above in <Tensile modulus and breaking stress>. The results are shown in Table 2.

The resin compositions of Examples 1B to 5B exhibit either high breaking stress or low tensile modulus compared to the resin compositions or the propylene-based polymer of Comparative Examples 1B to 3B, and have an excellent balance between flexibility and strength. For example, when comparing an Example and a Comparative Example having similar breaking stress, the Example exhibited lower tensile modulus and superior flexibility compared to the Comparative Example. On the other hand, when comparing an Example and a Comparative Example having similar tensile modulus, the Example exhibited higher breaking stress and superior strength compared to the Comparative Example.

### [Table 2]

**Table 2**

| | | | Example 1B | Example 2B | Example 3B | Example 4B | Example 5B | Comparative Example 1B | Comparative Example 2B | Comparative Example 3B |
|---|---|---|---|---|---|---|---|---|---|---|
| Composition (parts by mass) | Propylene/α-olefin Copolymer (A-1) | | 20 | | | | | | | |
| | Propylene/α-olefin Copolymer (A-2) | | | 20 | | | | | | |
| | Propylene/α-olefin Copolymer (A-3) | | | | 20 | | 40 | | | |
| | Propylene/α-olefin Copolymer (A-4) | | | | | 20 | | | | |
| | PER-1 | | | | | | | 20 | 40 | |
| | Propylene-based polymer (B-1) | | 80 | 80 | 80 | 80 | 60 | 80 | 60 | 100 |
| Properties | Breaking stress | MPa | 37 | 37 | 37 | 39 | 34 | 36 | 34 | 40 |
| | Tensile modulus | MPa | 859 | 829 | 685 | 881 | 304 | 868 | 554 | 1261 |

### [Examples 1C to 7C and Comparative Examples 1C to 3C]

In Examples 1C to 7C and Comparative Examples 1C to 3C, using a single screw extruder of φ40 mm, various polymers were melt-kneaded under conditions of a melting temperature of 210°C and a rotation speed of 40 to 50 rpm in the amounts (parts by mass) shown in Table 3 to prepare resin compositions.

The propylene-based polymer (B-1), the ethylene-based polymer (C-1), and the ethylene-based polymer (C-2) used in the Examples and Comparative Examples are as follows:
- Propylene-based polymer (B-1): random polypropylene (manufactured by Prime Polymer Co., Ltd., Prime Polypro F327, MFR (230°C, 2.16 kg load): 7.0 g/10 min, melting point: 140°C);
- Ethylene-based polymer (C-1): high-pressure low-density polyethylene (manufactured by DOW-MITSUI POLYCHEMICALS CO., LTD., Mirason 11P, MFR (190°C, 2.16 kg load): 7.2 g/10 min, density: 917 kg/m³, melting point: 108°C); and
- Ethylene-based polymer (C-2): ethylene/propylene copolymer (MFR (190°C, 2.16 kg load): 0.6 g/10 min, density: 869 kg/m³, propylene content: 19 mol%, melting point: 40°C).

### <Tensile modulus and breaking stress (23°C)>

Except that the resin compositions obtained in the Examples or Comparative Examples were used instead of the propylene/α-olefin copolymer, the tensile modulus and breaking stress were measured in the same manner as described above in <Tensile modulus and breaking stress>. The results are shown in Table 3.

### <Heat resistance (breaking stress (80°C))>

Using a hydraulic heat press molding machine set at 190°C, the resin compositions obtained in the Examples or Comparative Examples were heated for 5 minutes, molded under pressurization at 7.5 MPa for 2 minutes, and then cooled under pressurization at 20°C and 7.5 MPa for 5 minutes to give 2 mm-thick sheets (specimens).

After 7 days or more had elapsed at room temperature from molding, dumbbells 5A were prepared from the sheets in accordance with JIS K7161-2, and the breaking stress was measured for the dumbbells under conditions of 80°C and a tensile speed of 500 mm/min. The obtained values were used as an index of heat resistance.

### <Resistance to whitening>

Using a hydraulic heat press molding machine set at 190°C, the resin compositions obtained in the Examples or Comparative Examples were heated for 5 minutes, molded under pressurization at 7.5 MPa for 2 minutes, and then cooled under pressurization at 20°C and 7.5 MPa for 5 minutes to give 0.5 mm-thick sheets (specimens).

After 7 days or more had elapsed at room temperature from molding, dumbbells No. 2 specified in JIS K6251 were prepared from the sheets. For the dumbbells, the color phase before extension (L value (before extension)) and the color phase after extending the dumbbell by 15 mm at 23°C and a tensile speed of 50 mm/min (L value (after extension)) were measured using a spectrophotometric colorimeter (CM-3700d manufactured by KONICA MINOLTA, INC.). A color phase change (ΔL) was calculated on the basis of the following equation. A smaller ΔL value indicates that the resin composition has better resistance to whitening. 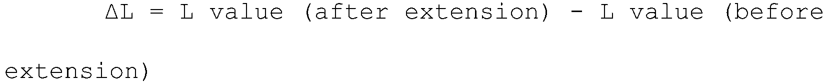 ΔL = L value (after extension) - L value (before extension)

### [Table 3]

**Table 3**

| | | | Example 1C | Example 2C | Example 3C | Example 4C | Example 5C | Example 6C | Example 7C | Comparative Example 1C | Comparative Example 2C | Comparative Example 3C |
|---|---|---|---|---|---|---|---|---|---|---|---|---|
| Composition (parts by mass) | Propylene/α-olefin Copolymer (A-2) | | 20 | 30 | | 20 | 30 | | | | | |
| | Propylene/α-olefin Copolymer (A-3) | | | | 20 | | | 20 | 30 | | | |
| | Propylene-based polymer (B-1) | | 75 | 65 | 75 | 65 | 55 | 65 | 55 | 75 | 65 | 55 |
| | Ethylene-based polymer (C-1) | | 5 | 5 | 5 | | | | | 5 | 5 | |
| | Ethylene-based polymer (C-2) | | | | | 15 | 15 | 15 | 15 | | | 15 |
| | PER-1 | | | | | | | | | 20 | 30 | 30 |
| Properties | Tensile modulus | MPa | 772 | 603 | 635 | 584 | 413 | 480 | 303 | 769 | 607 | 459 |
| | Breaking stress (23°C) | MPa | 38 | 37 | 40 | 35 | 33 | 35 | 32 | 39 | 36 | 34 |
| | Breaking stress (80°C) | MPa | 27 | 24 | 24 | 22 | 21 | 21 | 20 | 27 | 25 | 20 |
| | Resistance to whitening (ΔL) | - | 11 | 8 | 10 | 11 | 10 | 10 | 5 | 13 | 13 | 12 |

### [Example 1D and Comparative Examples 1D to 2D]

In Example 1D and Comparative Examples 1D to 2D, using a single screw extruder of φ40 mm, various polymers were melt-kneaded under conditions of a melting temperature of 210°C and a rotation speed of 40 to 50 rpm in the amounts (parts by mass) shown in Table 4 to prepare resin compositions. The details of the various polymers used in the Example and Comparative Examples are as described above.

By extruding the obtained resin compositions at 230°C using a cast film forming machine, 100 µm-thick single-layered unstretched films were prepared. Then, a 25 µm-thick stretched PET film (manufactured by Toray Industries, Inc.) was laminated onto one surface of the obtained unstretched film by a dry lamination method via an adhesive agent layer (polyurethane adhesive composed of 90 parts by mass of TakeLac A-525S (manufactured by Mitsui Chemicals, Inc.) and 10 parts by mass of Takenate A-50 (manufactured by Mitsui Chemicals, Inc.)) to produce a laminate. That is, the laminate includes a layer composed of the resin composition shown in Table 4, the adhesive agent layer, and a substrate layer composed of the stretched PET film, in this order, and the adhesive agent layer is in direct contact with the layer composed of the resin composition shown in Table 4 and the substrate layer composed of the stretched PET film. Using the laminate, evaluation was performed as described below.

### <Heat seal (HS) strength (before heat aging)>

A 50 µm-thick Teflon (registered trademark) sheet, two laminates obtained, and a 50 µm-thick Teflon (registered trademark) sheet were stacked in this order to give a test material. Here, the two laminates were stacked in such a manner that the surfaces having the layer composed of the resin composition face each other.

The heat sealing bars of a heating seal tester (manufactured by TESTER SANGYO CO,. LTD., TB-701B model) were adjusted to 15 mm in width and 300 mm in length, the temperature of the lower sealing bar was set to 70°C, the temperature of the upper sealing bar was set to 190°C, and test material was held between the sealing bars, and heat-sealed at a pressure of 0.2 MPa for 1.0 second. Thereafter, the two Teflon (registered trademark) sheets were removed to obtain a test laminate, and the test laminate was left to stand at 23°C for 1 day. The test laminate was slit to a width of 15 mm so as to include a heat-sealed portion, and non-heat-sealed portions were chucked in a tensile tester (manufactured by INTESCO co., ltd., IM-20ST). The maximum load was measured when the heat-sealed portion was peeled in the 180° direction at a rate of 300 mm/min. The measurement was performed five times, and the average value of maximum loads was defined as heat seal strength.

### <Heat seal (HS) strength (after heat aging)>

The heat seal strength after heat aging was measured in the same manner as in the test for HS strength (before heat aging), except that a laminate obtained using a single-layered unstretched film which had been obtained by heat aging, at 85°C for 5 days, was used instead of the single-layered unstretched film in the test for HS strength (before heat aging).

### <Heat seal (HS) strength retention ratio>

From the HS strength before and after heat aging, the HS strength retention ratio was determined by the following equation. A higher value indicates that the resin composition and a film obtained therefrom exhibit excellent heat resistance. 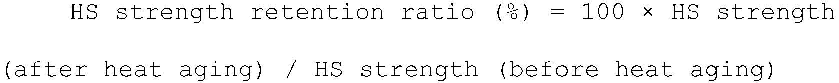 HS strength retention ratio (%) = 100 × HS strength (after heat aging) / HS strength (before heat aging)

The obtained results are shown in Table 4.

### [Table 4]

**Table 4**

| | | | Example 1D | Comparative Example 1D | Comparative Example 2D |
|---|---|---|---|---|---|
| Composition (parts by mass) | Propylene/α-olefin Copolymer (A-3) | | 20 | | |
| | PER-1 | | | 20 | 40 |
| | Propylene-based polymer (B-1) | | 80 | 80 | 60 |
| Properties | Heat seal strength | N/15 mm | 30 | 30 | 30 |
| | Heat seal strength (after 85°C × 5 days) | N/15 mm | 27 | 25 | 22 |
| | Heat seal strength retention ratio | % | 88 | 83 | 74 |

## Claims

1. A propylene/α-olefin copolymer (A) comprising:
a constituent unit (i) derived from propylene; and
a constituent unit (ii) derived from an α-olefin having 5 to 20 carbon atoms,
wherein the propylene/α-olefin copolymer (A) satisfies the following requirements (A1) and (A2):
(A1) when a total content of the constituent unit (i) and the constituent unit (ii) is taken as 100 mol%,
a content of the constituent unit (i) is 70 to 99 mol%, and
a content of the constituent unit (ii) is 1 to 30 mol%; and
(A2) a melting point (Tm) measured by a differential scanning calorimeter (DSC) is lower than 130°C or is not observed.

2. The propylene/α-olefin copolymer (A) according to claim 1, wherein the α-olefin having 5 to 20 carbon atoms is 4-methyl-1-pentene.

3. The propylene/α-olefin copolymer (A) according to claim 2, wherein a density measured at 25°C in accordance with ASTM D1505 is 855 to 875 kg/m³.

4. The propylene/α-olefin copolymer (A) according to any one of claims 1 to 3, wherein a glass transition temperature (Tg) is -12 to -3°C.

5. The propylene/α-olefin copolymer (A) according to any one of claims 1 to 3, wherein the melting point (Tm) is lower than 110°C or is not observed.

6. The propylene/α-olefin copolymer (A) according to any one of claims 1 to 3, wherein an intrinsic viscosity [η] in decalin solvent at 135°C is 1.8 to 2.5 dl/g.

7. The propylene/α-olefin copolymer (A) according to any one of claims 1 to 3, wherein a ratio (Mw/Mn) of a weight average molecular weight (Mw) to a number average molecular weight (Mn), measured by gel permeation chromatography (GPC) and obtained in terms of polystyrene, is 1.7 to 2.5.

8. A resin composition comprising:
the propylene/α-olefin copolymer (A) according to claim 1; and
a propylene-based polymer (B) satisfying the following requirements (B1) and (B2):
(B1) an MFR measured in accordance with ASTM D1238E at 230°C under a load of 2.16 kg is 0.1 to 500 g/10 min; and
(B2) a melting point (Tm) measured by a differential scanning calorimeter (DSC) is 110°C to 170°C.

9. The resin composition according to claim 8, wherein the α-olefin having 5 to 20 carbon atoms in the propylene/α-olefin copolymer (A) is 4-methyl-1-pentene.

10. The resin composition according to claim 8 or 9, wherein, when a total content of the copolymer (A) and the polymer (B) is taken as 100 mass%,
a content of the copolymer (A) is 8 to 90 mass%, and
a content of the polymer (B) is 10 to 92 mass%.

11. The resin composition according to claim 8 or 9, wherein the propylene-based polymer (B) comprises a random polypropylene or a block polypropylene.

12. The resin composition according to claim 8, further comprising an ethylene-based polymer (C).

13. The resin composition according to claim 12, wherein the α-olefin having 5 to 20 carbon atoms in the propylene/α-olefin copolymer (A) is 4-methyl-1-pentene.

14. The resin composition according to claim 12 or 13, wherein the propylene-based polymer (B) comprises a random polypropylene or a block polypropylene.

15. The resin composition according to claim 12 or 13, wherein the ethylene-based polymer (C) comprises a high-pressure low-density polyethylene (c1) or an ethylene/α-olefin copolymer (c2).

16. The resin composition according to claim 15, wherein
a density of the high-pressure low-density polyethylene (c1) is 900 to 925 kg/m³,
the ethylene/α-olefin copolymer (c2) includes at least a constituent unit derived from ethylene and a constituent unit derived from an α-olefin having 3 to 20 carbon atoms, and
a content of the constituent unit derived from ethylene is 80 to 99 mol%, and a content of the constituent unit derived from an α-olefin having 3 to 20 carbon atoms is 1 to 20 mol%.

17. The resin composition according to claim 12 or 13, wherein, when a total content of the copolymer (A), the polymer (B), and the polymer (C) is taken as 100 mass%,
a content of the copolymer (A) is 15 to 45 mass%,
a content of the polymer (B) is 50 to 80 mass%, and
a content of the polymer (C) is 5 to 15 mass%.

18. A shaped article comprising the propylene/α-olefin copolymer (A) according to any one of claims 1 to 3, or the resin composition according to claim 8, 9, 12, or 13.

19. The shaped article according to claim 18, which is a film.

20. The shaped article according to claim 18, which is a package for batteries.

21. An electrical storage device comprising the shaped article according to claim 18.
